(19) Europäisches Patentamt
European Patent Office
Office européen des brevets

(11) **EP 4 780 009 A1**

(12) **EUROPEAN PATENT APPLICATION**
published in accordance with Art. 153(4) EPC

(43) Date of publication:
**22.07.2026 Bulletin 2026/30**

(21) Application number: **24891628.0**

(22) Date of filing: **20.09.2024**

(51) International Patent Classification (IPC):
*H04N 23/55* (2023.01)          *H04N 23/54* (2023.01)
*G03B 17/12* (2021.01)          *G02B 13/00* (2006.01)
*G02B 15/14* (2006.01)          *G03B 9/02* (2021.01)

(52) Cooperative Patent Classification (CPC):
**G02B 13/00; G02B 15/14; G03B 9/02; G03B 17/12;
H04N 23/54; H04N 23/55**

(86) International application number:
**PCT/KR2024/014154**

(87) International publication number:
**WO 2025/105681 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.11.2023 KR 20230156186
15.11.2023 KR 20230157956**

(71) Applicant: **Samsung Electronics Co., Ltd.
Suwon-si, Gyeonggi-do 16677 (KR)**

(72) Inventors:
• **SEO, Jinseon
Suwon-si, Gyeonggi-do 16677 (KR)**
• **BAE, Jaecheol
Suwon-si, Gyeonggi-do 16677 (KR)**

(74) Representative: **HGF
HGF Limited
4th Floor, 1 City Square
Leeds LS1 2ES (GB)**

(54) **IMAGING DEVICE AND ELECTRONIC DEVICE COMPRISING SAME**

(57)     According to one embodiment of the present disclosure, an imaging device may comprise: an image sensor; and a lens assembly configured to focus or guide light to the image sensor by comprising at least five lenses sequentially aligned along an optical axis from a first lens farthest from the image sensor. In one embodiment, the lens assembly or the at least five lenses may comprise: a first lens having a positive refractive power; a second lens disposed between the first lens and the image sensor and having a negative refractive power; a third lens disposed between the second lens and the image sensor and having a negative refractive power; a fourth lens having a meniscus shape convex toward the image sensor and a shape in which the thickness thereof decreases toward the edge, wherein the fourth lens is disposed between the third lens and the image sensor and has a positive refractive power; and a fifth lens having a shape in which the object-side surface is convex and the sensor-side surface is concave in a central region, wherein the fifth lens is disposed between the fourth lens and the image sensor and has a negative refractive power. In one embodiment, the lens assembly can be easily miniaturized while providing optical performance suitable for a large/high-pixel image sensor by satisfying at least some of the conditions disclosed in the present document. Various other embodiments may also be possible.

**EP 4 780 009 A1**

400

SBJ

S2
S4 S6
S7
S9
S8
S10
S11
S12 S13

S3

O

S1

IP

L1 L2 L3
stop

L4

L5

F

img

I

IP

IP

IP

LA {
L1
L2
L3
L4
L5
}

# FIG. 5

**Description**

[Technical Field]

Embodiment(s) of the disclosure relate to an image capturing device, and for example, to an image capturing device including a plurality of lenses and an electronic device including the same.

[Background Art]

Optical devices, for example, cameras capable of capturing images or videos, have been widely used, and recently, digital cameras or video cameras having solid-state image sensors such as a charge coupled device (CCD) or a complementary metal-oxide semiconductor (CMOS) have become common. An optical device employing a solid-state image sensor (CCD or CMOS) is gradually replacing a film-type optical device because it is easier to store, duplicate, and move images compared to the film-type optical device.

Recently, two or more selected from a plurality of optical devices, for example, a macro camera, a telephoto camera, and/or a wide-angle camera are mounted on a single electronic device to improve the quality of a captured image and provide various visual effects to the captured image. For example, a high-quality captured image may be obtained by obtaining subject images through a plurality of cameras having different optical characteristics and synthesizing them. As high-quality captured images are obtained by mounting a plurality of optical devices (e.g., cameras), electronic devices such as mobile communication terminals or smartphones are gradually replacing electronic devices specialized for a photographing function, such as digital compact cameras, and are expected to be able to replace high-performance cameras such as digital single-lens reflex (DSLR) cameras in the future.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, an image capturing device may include an image sensor, and a lens assembly configured to focus or guide light to the image sensor by including at least five lenses sequentially arranged along an optical axis from a first lens farthest from the image sensor. In an embodiment, the lens assembly or the at least five lenses may include the first lens having a positive refractive power, a second lens disposed between the first lens and the image sensor and having a negative refractive power, a third lens disposed between the second lens and the image sensor and having a negative refractive power, a fourth lens having a meniscus shape that is convex toward the image sensor and has a thickness decreasing toward an edge of the fourth lens, disposed between the third lens and the image sensor, and having a positive refractive power, and a fifth lens having a shape that includes a convex subject-side surface and a concave sensor-side surface in a chief region of the fifth lens, disposed between the fourth lens and the image sensor, and having a negative refractive power. In an embodiment, the lens assembly may satisfy the following [Conditional Expression 1].

[Conditional Expression 1]

$$1.5 =< (T34+T45)/T23 =< 3$$

Herein, 'T23' may be an air gap between the second lens and the third lens, measured on the optical axis, 'T34' may be an air gap between the third lens and the fourth lens, measured on the optical axis, and 'T45' may be an air gap between the fourth lens and the fifth lens, measured on the optical axis.

According to an embodiment of the disclosure, an electronic device may include an image sensor, a lens assembly configured to focus or guide light to the image sensor by including at least five lenses sequentially arranged along an optical axis from a first lens farthest from the image sensor, a processor, and memory storing instructions that, when executed by the processor, cause the electronic device to receive light using the image sensor. In an embodiment, In an embodiment, the lens assembly or the at least five lenses may include the first lens having a positive refractive power, a second lens disposed between the first lens and the image sensor and having a negative refractive power, a third lens disposed between the second lens and the image sensor and having a negative refractive power, a fourth lens having a meniscus shape that is convex toward the image sensor and has a thickness decreasing toward an edge of the fourth lens, disposed between the third lens and the image sensor, and having a positive refractive power, and a fifth lens having a shape that includes a convex subject-side surface and a concave sensor-side surface in a chief region of the fifth lens, disposed between the fourth lens and the image sensor, and having a negative refractive power. In an embodiment, the electronic device and/or the lens assembly may satisfy the following [Conditional Expressions 1 and 2].

[Conditional Expression 1]

$$1.5 =< (T34+T45)/T23 =< 3$$

[Conditional Expression 2]

$$0.6 =< OAL/(ImgH*2) =< 0.69$$

Herein, 'T23' may be an air gap between the second lens and the third lens, measured on the optical axis, 'T34' may be an air gap between the third lens and the fourth lens, measured on the optical axis, 'T45' may be an air gap between the fourth lens and the fifth lens, measured on the optical axis, 'OAL' may be a distance from a subject-side surface of the first lens to the image sensor, measured on the optical axis, and 'ImgH' may be a maximum image height of the image sensor.

[Brief Description of Drawings]

The above or other aspects, configurations, and/or advantages of an embodiment of the disclosure may become more apparent through the following detailed description with reference to the accompanying drawings.

FIG. 1 is a block diagram illustrating an electronic device in a network environment according to an embodiment of the disclosure.

FIG. 2 is a block diagram illustrating a camera module according to an embodiment of the disclosure.

FIG. 3 is a perspective view illustrating a front surface of an electronic device according to an embodiment of the disclosure.

FIG. 4 is a perspective view illustrating a rear surface of the electronic device illustrated in FIG. 3, according to an embodiment of the disclosure.

FIG. 5 is a diagram illustrating an image capturing device and/or a lens assembly according to an embodiment of the disclosure.

FIG. 6 is a graph illustrating spherical aberration of the lens assembly of FIG. 5 according to an embodiment of the disclosure.

FIG. 7 is a graph illustrating astigmatism of the lens assembly of FIG. 5 according to an embodiment of the disclosure.

FIG. 8 is a graph illustrating distortion of the lens assembly of FIG. 5 according to an embodiment of the disclosure.

FIG. 9 is a diagram illustrating an image capturing device and/or a lens assembly according to an embodiment of the disclosure.

FIG. 10 is a graph illustrating spherical aberration of the lens assembly of FIG. 9 according to an embodiment of the disclosure.

FIG. 11 is a graph illustrating astigmatism of the lens assembly of FIG. 9 according to an embodiment of the disclosure.

FIG. 12 is a graph illustrating distortion of the lens assembly of FIG. 9 according to an embodiment of the disclosure.

FIG. 13 is a diagram illustrating an image capturing device and/or a lens assembly according to an embodiment of the disclosure.

FIG. 14 is a graph illustrating spherical aberration of the lens assembly of FIG. 13 according to an embodiment of the disclosure.

FIG. 15 is a graph illustrating astigmatism of the lens assembly of FIG. 13 according to an embodiment of the disclosure.

FIG. 16 is a graph illustrating distortion of the lens assembly of FIG. 13 according to an embodiment of the disclosure.

FIG. 17 is a diagram illustrating an image capturing device and/or a lens assembly according to an embodiment of the disclosure.

FIG. 18 is a graph illustrating spherical aberration of the lens assembly of FIG. 17 according to an embodiment of the disclosure.

FIG. 19 is a graph illustrating astigmatism of the lens assembly of FIG. 17 according to an embodiment of the disclosure.

FIG. 20 is a graph illustrating distortion of the lens assembly of FIG. 17 according to an embodiment of the disclosure.

FIG. 21 is a diagram illustrating an image capturing device and/or a lens assembly according to an embodiment of the disclosure.

FIG. 22 is a graph illustrating spherical aberration of the lens assembly of FIG. 21 according to an embodiment of the disclosure.

FIG. 23 is a graph illustrating astigmatism of the lens assembly of FIG. 21 according to an embodiment of the disclosure.

FIG. 24 is a graph illustrating distortion of the lens assembly of FIG. 21 according to an embodiment of the disclosure.

Throughout the accompanying drawings, similar reference numerals may be assigned to similar parts, components, and/or structures.

[Mode for Carrying out the Invention]

As electronic devices become increasingly miniaturized, the conditions for ensuring optical performance while mounting image capturing devices such as cameras in these miniaturized devices are becoming progressively challenging. For example, while it may be easier to improve the optical performance of an image capturing device as the number and size of lenses increase, there are limitations on the number and size of lenses when mounting them in miniaturized electronic devices. As user demand for more advanced optical performance increases, the performance of image sensors is improving through a pixel count or a size (e.g., image height), but it may be increasingly difficult to miniaturize a lens assembly that matches such image sensor performance.

An embodiment of the disclosure is to address at least the above-mentioned problems and/or disadvantages and to provide at least the advantages described below, and may provide an image capturing device having optical performance suitable for a high-pixel and/or large-sized image sensor, and/or an electronic device including the same.

An embodiment of the disclosure may provide an image capturing device that implements good macro photography performance while having optical performance suitable for a high-pixel and/or large-sized image sensor, and/or an electronic device including the same.

An embodiment of the disclosure may provide an image capturing device that is easy to miniaturize while having optical performance suitable for a high-pixel and/or large-sized image sensor, and/or an electronic device including the same.

The technical objects to be achieved by the disclosure are not limited to the technical objects mentioned above, and other technical objects not mentioned will be clearly understood by those skilled in the art from the following description.

The following description of the accompanying drawings may provide an understanding of various exemplary implementations of the disclosure, including the claims and equivalents thereof. Although an exemplary embodiment disclosed in the following description includes various specific details to aid understanding, these are considered to be merely one of various exemplary embodiments. Accordingly, those skilled in the art will understand that various changes and modifications may be made to various implementations described herein without departing from the scope and spirit of the disclosure. Additionally, a description of well-known functions and configurations will be avoided for clarity and conciseness.

The terms and words used in the following description and claims are not limited to their bibliographical meanings but may be used to clearly and consistently describe an embodiment of the disclosure. Therefore, it will be apparent to those skilled in the art that the following description of various implementations of the disclosure is provided for illustration purposes only and not for the purpose of limiting the disclosure as defined by the scope of the claims and their equivalents.

It should be understood that the singular forms "a," "an," and "the" include plural referents unless the context clearly dictates otherwise. Thus, for example, a reference to "a component surface" may be understood as including one or more surfaces of the component.

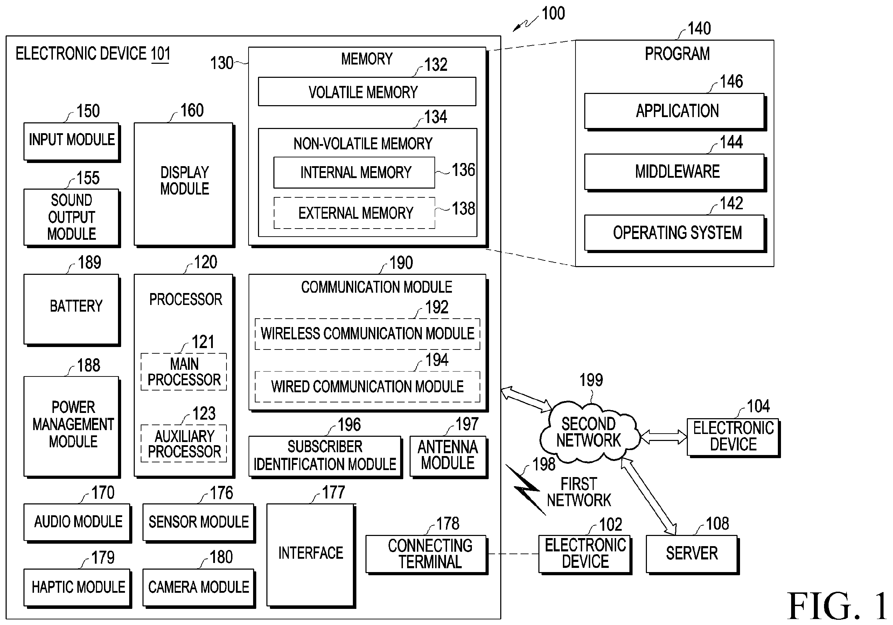

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

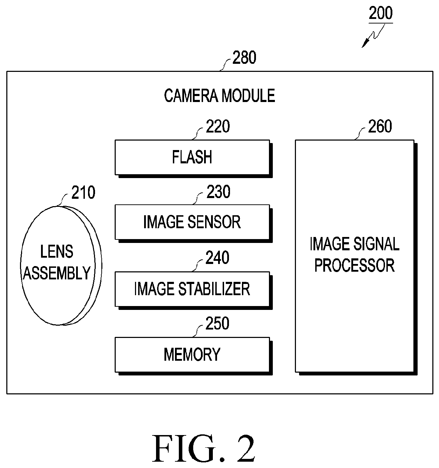

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 280 having different attributes or functions. In such a case, at least one of the plurality of camera modules 280 may form, for example, a wide-angle camera and at least another of the plurality of camera modules 280 may form a telephoto camera. Similarly, at least one of the plurality of camera modules 280 may form, for example, a front camera and at least another of the plurality of camera modules 280 may form a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

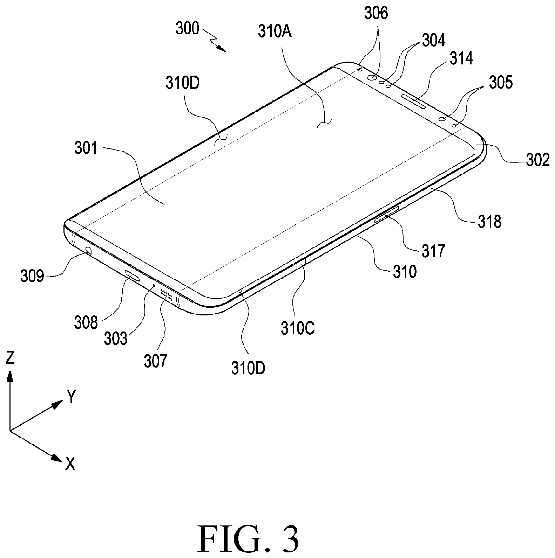

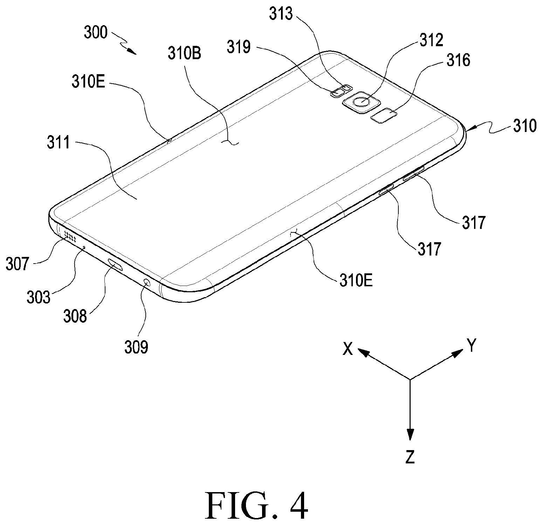

FIG. 3 is a perspective view illustrating a front surface of an electronic device 300 (e.g., the electronic device 101 of FIG. 1) according to an embodiment of the disclosure. FIG. 4 is a perspective view illustrating a rear surface of the electronic device 300 illustrated in FIG. 3 according to an embodiment of the disclosure.

Referring to FIGS. 3 and 4, the electronic device 300 (e.g., the electronic device 101 of FIG. 1) according to an embodiment may include a housing 310 which includes a first surface (front surface) 310A, a second surface (rear surface) 310B, and a side surface 310C surrounding a space between the first surface 310A and the second surface 310B. In an embodiment (not shown), the housing 310 may refer to a structure that forms a portion of the first surface 310A of FIG. 3, the second surface 310B of FIG. 4, and the side surfaces 310C. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an internal space together with the housing 310. In an embodiment, the term 'internal space' may refer to an internal space of the housing 310 for accommodating at least a portion of a display 301 to be described later or the display module 160 of FIG. 1.

According to an embodiment, the second surface 310B may be formed by a rear plate 311. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metal material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In the embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, sensor modules 304, 316, and 319, camera modules 305, 312, and 313 (e.g., the camera module 180 or 280 in FIG. 1 or FIG. 2), key input devices 317, or connector holes 308 and 309. In an embodiment, the electronic device 300 may not be provided with at least one (e.g., the key input devices 317 or a light emitting element 306) of the components or may additionally include other components.

The display 301 (e.g., the display module 160 of FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of the screen display area (e.g., active area) or an area (e.g., inactive area) outside the screen display area, and at least one of the audio module 314 (e.g., the audio module 170 of FIG. 1), the sensor module 304 (the sensor module 176 of FIG. 1), the camera module 305, or the light emitting element 306, which is aligned with the recess or the opening, may be included. In an embodiment (not shown), at least one of the audio module 314, the sensor module 304, the camera modules 305 (e.g., under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state or external environmental state of the electronic device 300. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a front camera module 305 disposed on the first surface 310A of the electronic device 300, and a rear camera module 312 and/or a flash 313 disposed on the second surface 310B. The camera modules 305 and 312 may include one or more lenses, an image sensor, and/or an image signal processor. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

In describing the following embodiments, reference may be made to the electronic devices 101, 102, 104, and 300 and/or the camera modules 180, 280, 305, 312, and 313 of the above-described embodiments. Image capturing devices 400, 500, 600, 700, and 800 in embodiments described below may implement part or the entirety of at least one of the above-described camera modules 180, 280, 305, 312, and 313.

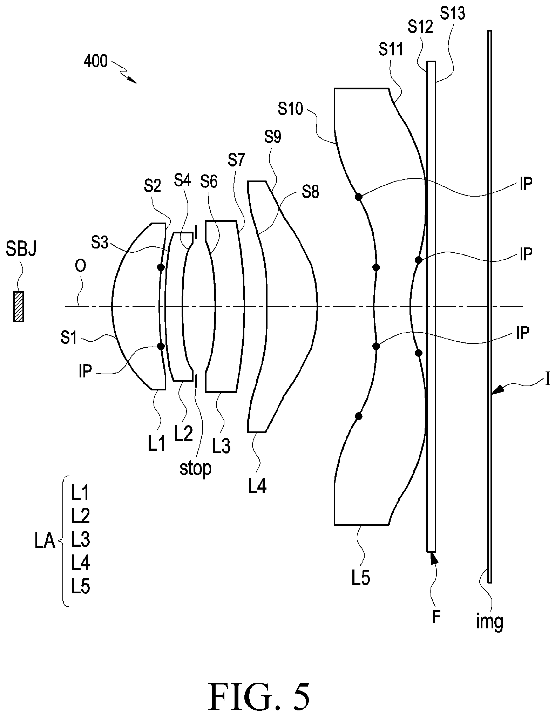

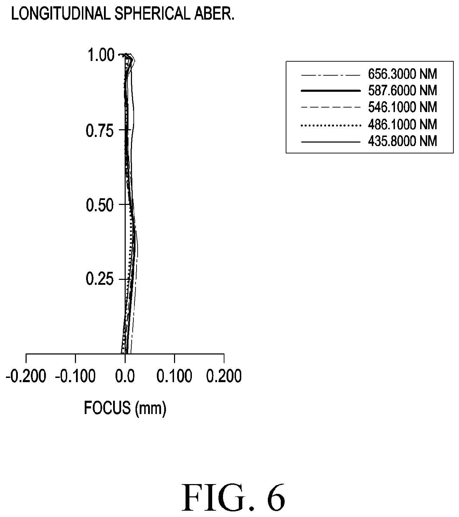

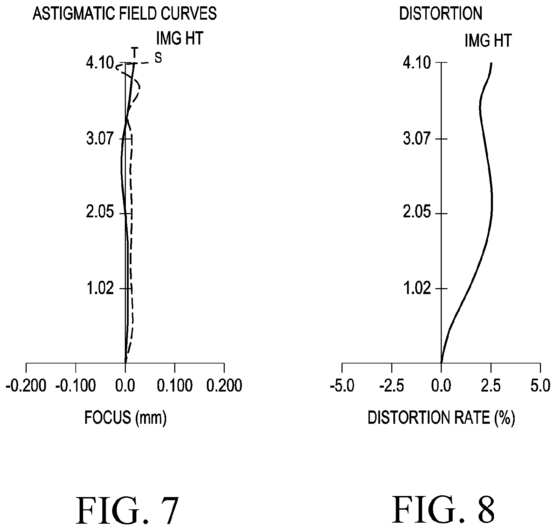

FIG. 5 is a diagram illustrating the image capturing device 400 and/or a lens assembly LA according to an embodiment of the disclosure. FIG. 6 is a graph illustrating spherical aberration of the lens assembly LA of FIG. 5 according to an embodiment of the disclosure. FIG. 7 is a graph illustrating astigmatism of the lens assembly LA of FIG. 5 according to an embodiment of the disclosure. FIG. 8 is a graph illustrating distortion of the lens assembly LA of FIG. 5 according to an embodiment of the disclosure.

FIG. 6 is a graph illustrating the spherical aberration of the image capturing device 400 and/or the lens assembly LA according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light with a wavelength of 656.3000 nanometers (NM), light with a wavelength of 587.6000NM, light with a wavelength of 546.1000NM, light with a wavelength of 486.1000NM, and light with a wavelength of 435.8000NM. FIG. 7 is a graph illustrating the astigmatism of the image capturing device 400 and/or the lens assembly LA according to an embodiment of the disclosure, for light with the wavelength of 546.1000NM, in which 'S' represents a sagittal plane with a solid line, and 'T' represents a tangential plane (or meridional plane) with a dotted line. FIG. 8 is a graph illustrating the distortion of the image capturing device 400 and/or the lens assembly LA according to an embodiment of the disclosure, for light with the wavelength of 546.1000NM. The refractive index of lens(es) mentioned in embodiments described below may refer to the refractive index for light with a wavelength of approximately 587.6000nm.

Referring to FIGS. 5 to 8, the image capturing device 400 (e.g., the lens assembly 210 of FIG. 2) according to an embodiment of the disclosure may include an image sensor I or 230 and the lens assembly LA. The lens assembly LA may include, for example, at least five lenses L1, L2, L3, L4, and L5. According to an embodiment, at least one of the lenses L1, L2, L3, L4, and L5 may be a lens made of plastic. For example, within a range satisfying the condition(s) described below, at least one of the lenses L1, L2, L3, L4, and L5 may be made of plastic. As the at least one lens is made of plastic, a production time or production cost may be reduced, and/or the lenses L1, L2, L3, L4, and L5 may be easily manufactured in designed shapes.

According to an embodiment, the lenses L1, L2, L3, L4, and L5 may be sequentially arranged along an optical axis O from a subject side toward an image sensor side. For example, the lenses L1, L2, L3, L4, and L5 may be disposed substantially in alignment with the image sensor I or 230 on the optical axis O. In an embodiment described below, ordinal numbers 'first,' 'second,' 'third,' 'fourth,' and 'fifth' assigned to the lenses L1, L2, L3, L4, and L5 may refer to the order of arrangement from the subject SBJ side. In an embodiment, in the image capturing device 400 and/or the lens assembly LA, an aperture stop (or a stop) may be disposed between the first lens L1 and the third lens L3. In an embodiment, the aperture stop may be understood as being implemented on a sensor-side surface S4 of the second lens L2.

According to an embodiment, an optical component such as an IR cut filter F may be disposed between any one of the at least five lenses L1, L2, L3, L4, and L5 and the image sensor I or 230. The IR cut filter F may, for example, suppress or block light (e.g., IR light) of a wavelength that is not identified by a user's naked eye but is detected by the photosensitive material of a film or the image sensor I or 230 from being incident on the image sensor I or 230. This IR cut filter F may be disposed between the fifth lens L5 and the image sensor I or 230. Depending on the purpose of the image capturing device 400, the IR cut filter F may be replaced with a band-pass filter that transmits IR light and suppresses or blocks visible light. In an embodiment, the IR cut filter F may be implemented by a coating material disposed on a surface of any one of the lenses L1, L2, L3, L4, and L5.

In the following detailed description, the first lens L1 may be referred to as the "first lens on the subject side" or the "lens disposed farthest from the image sensor I or 230," and the fifth lens L5 may be referred to as the "first lens on the image sensor side." In an embodiment, "aligned along a direction of the optical axis O" may refer to being aligned such that the optical axes of the respective lenses L1, L2, L3, L4, and L5 or the optical axis of the image sensor I or 230 (e.g., an imaging plane img) coincides with each other. The imaging plane img may, for example, receive or detect light aligned or focused by the lenses L1, L2, L3, L4, and L5. For example, the imaging plane img may be understood as an active area of the image sensor I or 230. A processor (e.g., the processor 120 of FIG. 1) may obtain an image of a subject SBJ by detecting light focused or guided by the lens assembly LA using the image sensor I or 230. In an embodiment, the processor (e.g., the processor 120 of FIG. 1) may perform a focus adjustment operation and/or a focal length adjustment operation by linearly moving at least one of the lenses L1, L2, L3, L4, and L5 along the direction of the optical axis O with respect to the image sensor I or 230. In an embodiment, the processor may cause an electronic device (e.g., the electronic device 101, 102, 104, or 300 of FIG. 1, FIG. 3, and/or FIG. 4) to receive or detect external light using the image sensor I or 230 by executing at least some of instruction(s) stored in memory (e.g., the memory 130 of FIG. 1). For example, the memory may store instruction(s) that cause the electronic device to receive at least a portion of light focused on the image sensor I or 230 and/or instruction(s) that cause the electronic device to obtain a subject image based on received light, and the instruction(s) may be executed by the processor.

In the following embodiment(s), although some of the reference numbers assigned to lens surfaces in the drawings are not directly mentioned, those skilled in the art will easily understand the configurations of the lenses L1, L2, L3, L4, and L5 or the lens surfaces based on lens data presented through [Tables] described below. In an embodiment, although not shown in the drawings, a lens surface (e.g., 'S5' in [Table 1]) exemplified in the [Tables] described below may be mentioned. The lens surface denoted by 'S5' may refer to a mechanical structure or a reference position referred to in the design or manufacture of the lens assembly LA. In an embodiment described below, the aperture stop is generally exemplified as being disposed on the sensor-side surface S4 of the second lens L2, to which the embodiment(s) of the disclosure are not limited. For example, 'S5' in [Table 1] described below may refer to the position of the aperture stop.

In describing the following various embodiments, reference numbers for some of the subject-side surfaces and sensor-side surfaces of the lenses L1, L2, L3, L4, and L5 and/or inflection points IP may be omitted. An 'inflection point (IP)' refers to, for example, a point where a radius of curvature changes while not intersecting the optical axis O, and may be denoted by a symbol '•' in the drawings while the reference number may be omitted. When it is said that "the radius of curvature changes," this may be understood as the value of the radius of curvature changing from a negative value to a positive value or from a positive value to a negative value.

For the reference numbers of lens surfaces omitted in the drawings, the configurations of different embodiments may be applied adaptively, and lens data of each embodiment will be easily understood through the [Tables] described below. In the detailed description of the embodiment(s) of the disclosure, unless otherwise mentioned, 'concave' or 'convex' regarding the subject-side surfaces or sensor-side surfaces of the lenses L1, L2, L3, L4, and L5 may refer to a lens surface shape at a point intersecting the optical axis O or in a paraxial region intersecting the optical axis O. A shape mentioned as 'concave' may refer to a lens surface forming a curved surface in a form where a lens thickness decreases towards the optical axis O in a paraxial region. A shape mentioned as 'convex' may refer to a lens surface forming a curved surface in a form where a lens thickness increases towards the optical axis O in a paraxial region.

Further, in the following detailed description, values regarding the radii, effective focal lengths f, total track length (OAL), air gaps, and thicknesses of the lenses L1, L2, L3, L4, and L5, or the image height of the image sensor I or 230 may all have units of mm unless otherwise specified. Further, the radii, effective focal lengths, OAL, air gaps, or thicknesses of the lenses L1, L2, L3, L4, and L5 may be distances measured on the optical axis O (e.g., distances measured along the optical axis O from a point where the optical axis O intersects), and/or ImgH of the image sensor I may be a distance measured along a direction substantially perpendicular to the optical axis O from the point where the optical axis O intersects. In an embodiment, ImgH may be half of the diagonal length of the image sensor I or the imaging plane img.

According to an embodiment, the lens disposed first from the subject SBJ side among the lenses L1, L2, L3, L4, and L5, for example, the first lens L1 disposed farthest from the image sensor I or 230, may have a positive refractive power. In an embodiment, the first lens L1 may be a plastic lens. When the first lens L1 is made as a plastic lens, manufacturing in a designed shape or mass production may be easy. In an embodiment, the first lens L1 may have a meniscus shape convex toward the subject. For example, the first lens L1 may be a plastic aspherical lens and/or have a refractive index of approximately 1.55 or less.

According to an embodiment, when having a meniscus shape, the sensor-side surface S2 of the first lens L1 may be concave in a chief region (e.g., paraxial region) intersecting the optical axis O, which may be useful for reducing the size (e.g., total length) of the lens assembly LA. In an embodiment, the sensor-side surface S2 of the first lens L1 may include at least one inflection point IP. For example, when the chief region of the sensor-side surface S2 of the first lens L1 is concave, a marginal region of the sensor-side surface S2 of the first lens L1 around the chief region may have a shape convex toward the image sensor. When the first lens L1 includes at least one inflection point IP, it may be easy to control the spherical aberration of the lens assembly LA. In an embodiment, the refractive power or shape of the first lens L1 described above may be useful for reducing the total length of the lens assembly LA or the outer diameter of the first lens L1.

According to an embodiment, a lens disposed second from the subject SBJ side, for example, the second lens L2 disposed between the first lens L1 and the image sensor I or 230, may be a meniscus lens having a negative refractive power and being convex toward the subject SBJ. In an embodiment, the second lens L2 may be a plastic aspherical lens and have a refractive index of approximately 1.6 or more. In an embodiment, the second lens L2 may have a refractive index of approximately 1.66 or more. For example, the second lens L2 may be made of a high-refractive material, and when the second lens L2 is made of a high-refractive material, the lens assembly LA may be miniaturized while a field of view of about 80 degrees is implemented. In an embodiment, when the second lens L2 is made of a high-refractive and/or low-Abbe-number material and is combined with the first lens L1 of a low-refractive and/or high-Abbe-number material, aberration correction such as chromatic aberration correction may become easier.

According to an embodiment, the third lens L3 may be disposed third from the subject SBJ side, for example, between the second lens L2 and the image sensor I or 230, and have a negative refractive power. In an embodiment, the third lens L3 may be a meniscus lens convex toward the image sensor. For example, the third lens L3 may be a plastic aspherical lens and/or have a refractive index of approximately 1.6 or more. In an embodiment, the third lens L3 may have a refractive index of approximately 1.66 or more. In an embodiment, when the third lens L3 is made of a high-refractive material of approximately 1.6 or more, miniaturization of the lens assembly LA may be easy, and optical performance such as chromatic aberration may be stabilized.

According to an embodiment, an aperture stop, stop affecting the brightness (e.g., F-number) of the lens assembly LA may be disposed between the first lens L1 and the third lens L3. For example, the aperture stop, stop may be disposed between the second lens L2 and the third lens L3. In an embodiment, the aperture stop, stop may be implemented on the sensor-side surface S4 of the second lens L2. In an embodiment, the lens surface 'S5' mentioned in [Table 1] described below may be understood as referring to the position of the aperture stop, stop. In an embodiment, when the second lens L2 disposed in front of the aperture stop, stop has a meniscus shape convex toward the subject SBJ and the third lens L3 disposed behind the aperture stop, stop has a meniscus shape convex toward the image sensor I, 230, it may be useful for miniaturization of the lens assembly LA or correction of marginal curvature.

According to an embodiment, the fourth lens L4 may be disposed fourth from the subject SBJ side, for example, between the third lens L3 and the image sensor I or 230, and have a positive refractive power. In an embodiment, the fourth lens L4 may be a plastic aspherical lens having a meniscus shape convex toward the image sensor I, 230 at least in a chief region thereof.

According to an embodiment, the fifth lens L5 disposed between the fourth lens L4 and the image sensor I or 230 may have a negative refractive power and an alphabet letter "W" shape. For example, the fifth lens L5 may have a meniscus shape convex toward the subject SBJ in a chief region thereof, and a shape inclined toward the subject SBJ in a marginal region thereof. For example, at least one of a subject-side surface S10 or a sensor-side surface S11 of the fifth lens may include two inflection points IP. In the image capturing device 400 and/or the lens assembly LA of FIG. 5, a configuration may be exemplified in which the fifth lens L5 includes two inflection points IP on the subject-side surface S10 and one inflection point IP on the sensor-side surface S11. In an embodiment, the fifth lens L5 may be a plastic aspherical lens having a refractive index of approximately 1.55 or less.

According to an embodiment, the inflection shape, for example, the "W" shape of the fifth lens L5 may be useful for miniaturization of the lens assembly LA or correction of marginal curvature while providing optical performance matching a large-sized, high-pixel image sensor. In an embodiment, the inflection shape of the fifth lens L5 may facilitate control of the incidence angle of light rays incident on the image sensor I or 230. In an embodiment, in the lens assembly LA in which the fifth lens L5 has the "W" shape, a resolution change may increase from an approximately 0.5 field to an approximately 0.6 field during macro photography. This resolution change may be interpreted as a phenomenon occurring due to the deviation between the width of upper rays and the width of lower rays when the rays pass through a portion where the curvature change of the fifth lens L5 is large.

According to an embodiment, the fourth lens L4 may have a shape in which the thickness gradually decreases toward an edge of the fourth lens L4 in the marginal region. The thickness of the lens(es) mentioned in the embodiment(s) of the disclosure may be understood to refer to a thickness measured on the optical axis O or a thickness measured parallel to the optical axis O. In an embodiment, in the "W" shaped fifth lens L5, the marginal region may become thicker away from the optical axis O, and the change in curvature (or radius of curvature) may increase. When the change in thickness or the change in radius of curvature increases, the deviation between the upper rays and the lower rays may increase. In an embodiment, the deviation between the upper rays and the lower rays in the fifth lens L5 may be counterbalanced by the shape of the fourth lens L4. For example, the image capturing device 400 and/or the lens assembly LA according to embodiments of the disclosure may provide optical performance matching a large-sized high-pixel image sensor by including the "W" shaped fifth lens L5, and/or implement good macro performance by using the shape of the fourth lens L4.

According to an embodiment, the IR cut filter F may be disposed between the fifth lens L5 and the image sensor I or 230. As mentioned above, the IR cut filter F may block light in a wavelength band that is not detected by the user's naked eye, but detected by a photosensitive material or the image sensor I or 230. In an embodiment, when the image capturing device 400 functions as a camera (e.g., a depth camera) that detects light in the IR wavelength band, the IR cut filter F may be replaced with a band-pass filter and/or implemented as a coating material disposed on a lens surface of any one of the lenses L1, L2, L3, L4, and L5.

According to an embodiment, as the lens assembly LA as described above is implemented with approximately five lenses L1, L2, L3, L4, and L5, it may be easy to miniaturize and realize a field of view of approximately 80 degrees. In an embodiment, the lens assembly LA as described above may provide optical performance suitable for the high-pixel image sensor I or 230 of 50M or more while corresponding to an image height of approximately 4.0 mm or more (e.g., approximately 4.2 mm). In an embodiment, when focus adjustment (and/or focal length adjustment) is performed using at least one of the approximately five lenses L1, L2, L3, L4, and L5, the lens assembly LA may provide optical performance suitable for macro photography within approximately 10cm, in addition to a telephoto function.

According to an embodiment, the image capturing device 400 and/or its lens assembly LA may satisfy a condition presented through the following [Equation 1].

$$[Equation\ 1]$$
$$1.5 \leq \frac{(T34+T45)}{T23} \leq 3$$

Herein, 'T23' may be an air gap between the second lens L2 and the third lens L3, measured at the optical axis O, 'T34' may be an air gap between the third lens L3 and the fourth lens L4, measured on the optical axis O, and 'T45' may be an air gap between the fourth lens L4 and the fifth lens L5, measured at the optical axis O. When the lens assembly LA satisfies the condition of [Equation 1], gaps among the lenses L1, L2, L3, L4, and L5 may be appropriately secured, facilitating the manufacture or assembly of the lens assembly LA and allowing the lens assembly LA to be miniaturized. In an embodiment, when the lens assembly LA satisfies the condition of [Equation 1], marginal aberrations may be effectively controlled, and the performance of telephoto photography and/or macro photography may be improved. In an embodiment, when the calculated value of [Equation 1] exceeds an upper limit of 3, there may be difficulties in miniaturizing or reducing the weight of the lens assembly LA. In an embodiment, when the calculated value of [Equation 1] does not reach a lower limit of 1.5, an air gaps in arrangement of the aperture stop, stop may increase, which may make it difficult to secure a relative illumination (RI) ratio.

According to an embodiment, the image capturing device 400 and/or its lens assembly LA may satisfy a condition presented through the following [Equation 2].

$$[Equation\ 2]$$
$$0.6 \leq \frac{OAL}{(ImgH*2)} \leq 0.69$$

Herein, 'OAL' may be the distance from a subject-side surface S1 of the first lens L1 to the image sensor I or 230 (e.g., the imaging plane img), measured on the optical axis O, and 'ImgH' may be a maximum image height of the image sensor I or 230. In an embodiment, the maximum image height of the image sensor I or 230 may be measured in a vertical direction from a point where the optical axis O intersects the image sensor I or 230 or the imaging plane img. In an embodiment, half of the diagonal length of the imaging plane img or the active area may be understood as the maximum image height. For example, the maximum image height 'ImgH' of the image sensor I or 230 may refer to a maximum length from a point intersecting the optical axis O to an edge of the imaging plane img. In an embodiment, when the lens assembly LA satisfies the condition of [Equation 2], miniaturization of the image capturing device 400 and/or the lens assembly LA may be facilitated. For example, the lens assembly LA may have a reduced total length while providing optical performance suitable for a large-sized image sensor I or 230. In an embodiment, when the calculated value of [Equation 2] is greater than an upper limit, miniaturization of the lens assembly LA may be difficult, and when it is smaller than a lower limit, the lens assembly LA may be miniaturized, but there may be difficulties in processing or assembling the lenses L1, L2, L3, L4, and L5.

According to an embodiment, the image capturing device 400 and/or its lens assembly LA may satisfy a condition presented through the following [Equation 3].

$$[Equation\ 3]$$
$$1.7 \leq Fno \leq 1.9$$

Herein, 'Fno' may be the F-number of the lens assembly LA. When the calculated value of [Equation 3] exceeds 1.9, the lens assembly LA may be implemented as a dark optical system and/or the resolution may be lowered, which may make it difficult to obtain a high-quality image. In an embodiment, when the calculated value of [Equation 3] is less than 1.7, the lens assembly LA may be implemented as a bright optical system but require a larger number of lenses, which may cause difficulties in miniaturizing the lens assembly LA.

According to an embodiment, the image capturing device 400 and/or its lens assembly LA may satisfy a condition presented through the following [Equation 4].

[Equation 4]

$$35 \leq HFOV \leq 45$$

Herein, 'HFOV' is a half field of view of the lens assembly LA, and its unit may be degrees. In an embodiment, having a half field of view that exceeds an upper limit of [Equation 4] may be advantageous for miniaturization as the focal length of the lens assembly LA is reduced, but it may be difficult to secure the amount of marginal light. In an embodiment, having a half field of view smaller than a lower limit of [Equation 4] may reduce the field of view and make it easier to secure a marginal light amount, but the macro performance may deteriorate as the focal length increases. For example, when the condition of [Equation 4] is satisfied, the lens assembly LA may be mounted on a miniaturized electronic device such as a smartphone and provide good optical performance in the telephoto and macro function.

According to an embodiment, the image capturing device 400 and/or its lens assembly LA may satisfy a condition presented through the following [Equation 5].

[Equation 5]

$$\frac{T4}{TA} \leq 0.17$$

Herein, 'T4' may be the thickness of the fourth lens L4 measured on the optical axis, and 'TA' may be the distance from the subject-side surface S1 of the first lens L1 to the sensor-side surface S11 of the fifth lens L5, measured on the optical axis O. [Equation 5] relates to the specifications of the fourth lens L4, and when the lens assembly LA satisfies the condition of [Equation 5], miniaturization may be achieved while flare or stray light caused by reflection or refraction from the fourth lens L4 may be suppressed. For example, when the specifications or arrangement of the lenses L1, L2, L3, L4, and L5 does not satisfy the condition presented in [Equation 5], there may be difficulties in miniaturizing the lens assembly LA, and the quality of a captured image may deteriorate due to flare or stray light.

According to an embodiment, the image capturing device 400 and/or its lens assembly LA may satisfy a condition presented through the following [Equation 6].

[Equation 6]

$$0 \leq \frac{(R7-R8)}{(R7+R8)} \leq 1$$

Herein, 'R7' may be a radius of curvature at a point of a subject-side surface S8 of the fourth lens L4, which intersects the optical axis O, and 'R8' may be a radius of curvature at a point of a sensor-side surface S9 of the fourth lens L4, which intersects the optical axis O. [Equation 6] may, for example, present a condition regarding the shape or refractive power of the fourth lens L4. In an embodiment, the fifth lens L5 may have a shape and refractive power that are different from or opposite to those of the fourth lens L4. In an embodiment, when the fourth lens L4 satisfies the condition of [Equation 6], it may counterbalance resolution degradation between an approximately 0.5 field and an approximately 0.6 field caused by the shape of the fifth lens L5.

According to an embodiment, the image capturing device 400 and/or its lens assembly LA may satisfy a condition presented through the following [Equation 7].

[Equation 7]

$$0.3 \leq \frac{Et4}{T4} \leq 0.5$$

Herein, 'Et4' may be an edge thickness of the fourth lens L4 measured parallel to the optical axis O, and 'T4' may be the thickness of the fourth lens L4 measured on the optical axis O. In an embodiment, when the calculated value of [Equation 7] exceeds an upper limit, the difference in thickness between the chief region and the marginal region becomes small, which may degrade modulation transfer function (MTF) performance. In an embodiment, when the calculated value of [Equation 7] is smaller than a lower limit, there may be difficulties in molding the fourth lens L4 with plastic due to the thickness difference between the chief and marginal regions. For example, it may be difficult to inject molten resin into a mold or control the distribution of molten resin in a molding space, leading to difficulties in mass production of the fourth lens L4. In an embodiment, when the calculated value of [Equation 7] is smaller than a lower limit, flare or stray light caused by the fourth lens L4 may increase.

According to an embodiment, [Equations 5, 6, and 7] generally present conditions regarding the fourth lens L4.

When the lens assembly LA and/or the fourth lens L4 satisfy the conditions presented through [Equations 5, 6, and 7], marginal aberration control may be facilitated. In an embodiment, when the lens assembly LA and/or the fourth lens L4 satisfy the conditions presented through [Equations 5, 6, and 7], the optical performance required for telephoto photography and the optical performance required for macro photography may be favorably secured. In an embodiment, when the lens assembly LA and/or the fourth lens L4 satisfies the conditions presented through [Equations 5, 6, and 7], flare or stray light that may be caused by the fourth lens L4 may be suppressed, and a better-quality captured image may be obtained.

According to an embodiment, when including the aperture stop, stop disposed between the first lens L1 and the third lens L3, the image capturing device 400 and/or its lens assembly LA may satisfy a condition presented through the following [Equation 8].

$$[Equation\ 8]$$
$$0.1 \le \frac{ST}{SL} \le 0.5$$

Herein, 'ST' may be the distance from the subject-side surface S1 of the first lens L1 to the aperture stop, stop, measured on the optical axis O, and 'SL' may be the distance from the aperture stop, stop to the sensor-side surface S11 of the fifth lens L5, measured on the optical axis O. According to an embodiment, the aperture stop, stop may be disposed in front of the third lens L3. For example, the aperture stop, stop may be implemented on the sensor-side surface S4 of the second lens L2. The position of the aperture stop, stop may be chosen, for example, considering aberration control or securing an RI ratio. For example, when the aperture stop, stop is disposed between the first lens L1 and the third lens L3, aberration control may be facilitated and/or the performance of the lens assembly LA regarding the RI ratio may be improved. In an embodiment, when the calculated value of [Equation 8] is smaller than a lower limit, a field diameter becomes smaller, which may facilitate miniaturization of the lens assembly LA, but aberration control or MTF performance may deteriorate. In an embodiment, when the calculated value of [Equation 8] is smaller than the lower limit, upper rays are cut off, which may lower the RI ratio of the lens assembly LA. In an embodiment, when the calculated value of [Equation 8] exceeds an upper limit, miniaturization of the lens assembly LA may be difficult, and lower rays may be cut off, lowering the RI ratio.

The image capturing device 400 and/or its lens assembly LA according to embodiment(s) of the disclosure may be miniaturized while providing optical performance matching a high-performance image sensor I or 230, for example, a large/high-pixel sensor, by satisfying at least some of the above-described conditions. For example, the lens assembly LA may be implemented with the approximately five lenses L1, L2, L3, L4, and L5, making it easy to achieve miniaturization or weight reduction, and may provide a field of view, a brightness, and/or aberration control performance suitable for an image sensor I or 230 of approximately 1/1.3 inches or larger.

According to an embodiment, the image capturing device 400 and/or its lens assembly LA may have a focal length of approximately 4.69mm and an F-number of approximately 1.88, and may realize a field of view of approximately 80 degrees. In an embodiment, the image capturing device 400 and/or its lens assembly LA may satisfy at least some of the above-described condition(s) and be manufactured to the specifications illustrated in the following [Table 1].

[Table 1]

| Lens surface (Surf) | Radius of curvature (Radius) | Thickness or air Gap (Thick) | Refractive index (nd) | Abbe number (Vd) |
|---|---|---|---|---|
| SBJ | infinity | 1000 | | |
| S1 | 1.708 | 0.7 | 1.54392 | 55.92 |
| S2 | 7.163 | 0.099 | | |
| S3 | 11.146 | 0.233 | 1.6714 | 19.25 |
| S4(stop) | 4.618 | 0.279 | | |
| S5 | infinity | 0.213 | | |
| S6 | -10.975 | 0.437 | 1.6714 | 19.25 |
| S7 | -58.026 | 0.339 | | |
| S8 | -6.887 | 0.74 | 1.54392 | 55.92 |
| S9 | -2.198 | 0.857 | | |

(continued)

| Lens surface (Surf) | Radius of curvature (Radius) | Thickness or air Gap (Thick) | Refractive index (nd) | Abbe number (Vd) |
|---|---|---|---|---|
| S10 | 2.614 | 0.529 | 1.53501 | 55.61 |
| S11 | 1.256 | 0.274 | | |
| S12 | infinity | 0.11 | 1.5168 | 64.17 |
| S13 | infinity | 0.786 | | |
| img | infinity | 0.004 | | |

The following [Table 2], [Table 3], and [Table 4] list the aspherical coefficients of the lenses L1, L2, L3, L4, and L5, and the definition of the aspherical surface is given by the following [Equation 9].

[Equation 9]

$$x = \frac{y^2/R}{1+\sqrt{1-(1+k)(y/R)^2}} + \sum_i (A_i)(y^i)$$

In [Equation 9], "x" represents a distance from a point of a lens surface through which the optical axis O passes in the direction of the optical axis O, "y" represents a distance from the optical axis O in a direction perpendicular to the optical axis O, 'R' represents a radius of curvature at a vertex of a lens, 'k' represents a Conic constant, and 'Ai' represents an aspherical coefficient, which may be listed as 'A', 'B', 'C', 'D', 'E', 'F', 'G', 'H', 'J', 'K', 'L', 'M', 'N', 'O' in the following [Tables].

[Table 2]

| Lens surface (Surf) | 1_ASP | 2_ASP | 3_ASP |
|---|---|---|---|
| Radius of curvature (Radius) | 1.708213719 | 7.162748213 | 11.14631685 |
| k(Conic) | 0.075307021 | 13.08807855 | 35.84007671 |
| A(4th)/C4 | 0.00937954 | -0.02237725 | 0.026321017 |
| B(6th)/C5 | -0.00226827 | -0.00083203 | 0.012237162 |
| C(8th)/C6 | -0.00238756 | -0.00208369 | 0.000443583 |
| D(10th)/C7 | -0.00116339 | -0.00037043 | 0.000499047 |
| E(12th)/C8 | -0.00048457 | -6.13E-05 | 6.55E-05 |
| F(14th)/C9 | -0.00015873 | -1.47E-05 | 2.45E-05 |
| G(16th)/C10 | -5.11E-05 | 1.10E-05 | 2.10E-06 |
| H(18th)/C11 | -9.42E-06 | -1.11E-05 | -5.47E-06 |
| J(20th)/C12 | -2.46E-07 | 4.30E-07 | -3.65E-06 |
| K(22th)/C13 | -1.42E-07 | 6.92E-07 | -6.76E-07 |
| L(24th)/C14 | -2.30E-07 | -9.59E-07 | -2.40E-07 |
| M(26th)/C15 | 1.27E-07 | 3.88E-07 | 1.51E-06 |
| N(28th)/C16 | -2.29E-08 | 1.33E-06 | -1.71E-06 |
| O(30th)/C17 | -4.92E-08 | -1.30E-06 | 1.85E-07 |

[Table 3]

| Lens surface (Surf) | 4_ASP | 6_ASP | 7_ASP |
|---|---|---|---|
| Radius of curvature (Radius) | 4.617627482 | -10.9752988 | -58.026283 |
| k(Conic) | -11.7490645 | 15.93479564 | -79.936031 |

(continued)

| Lens surface (Surf) | 4_ASP | 6_ASP | 7_ASP |
|---|---|---|---|
| A(4th)/C4 | 0.050181793 | -0.09757323 | -0.15288845 |
| B(6th)/C5 | 0.00913195 | -7.96E-05 | 0.022468631 |
| C(8th)/C6 | 0.001367529 | 0.000287378 | 0.002919024 |
| D(10th)/C7 | 0.000519965 | 7.72E-05 | -0.00012716 |
| E(12th)/C8 | 0.000141231 | 1.49E-05 | -5.29E-05 |
| F(14th)/C9 | 3.85E-05 | 9.53E-06 | 9.55E-05 |
| G(16th)/C10 | 6.72E-06 | 3.73E-06 | -2.85E-05 |
| H(18th)/C11 | -4.65E-06 | -1.08E-05 | -2.31E-05 |
| J(20th)/C12 | -4.40E-06 | -5.68E-06 | -1.06E-05 |
| K(22th)/C13 | -1.94E-06 | -5.35E-06 | 1.10E-05 |
| L(24th)/C14 | -1.60E-06 | -3.60E-06 | -4.66E-06 |
| M(26th)/C15 | -1.01E-06 | -1.57E-06 | 4.07E-06 |
| N(28th)/C16 | -1.27E-06 | -7.20E-07 | -2.38E-06 |
| O(30th)/C17 | 1.47E-06 | 1.78E-06 | 2.10E-06 |

[Table 4]

| Lens surface (Surf) | 8_ASP | 9_ASP | 10_ASP | 11_ASP |
|---|---|---|---|---|
| Radius of curvature (Radius) | -6.88717916 | -2.19767556 | 2.613521754 | 1.25566591 |
| k(Conic) | 2.084748592 | -0.22155049 | -1.27654018 | -0.99941086 |
| A(4th)/C4 | -0.12988466 | 0.11114634 | -2.97704248 | -6.17076224 |
| B(6th)/C5 | 0.081648582 | 0.124308247 | 1.051584478 | 1.360014565 |
| C(8th)/C6 | -0.01469228 | -0.02515127 | -0.35270248 | -0.35799404 |
| D(10th)/C7 | -0.00646047 | -0.01339103 | 0.109392335 | 0.168795061 |
| E(12th)/C8 | 0.004011822 | 0.003396065 | -0.03797896 | -0.08018846 |
| F(14th)/C9 | 0.000392689 | 0.002929419 | 0.009971387 | 0.020595663 |
| G(16th)/C10 | -0.00114722 | -0.00141797 | -0.00302316 | -0.01839084 |
| H(18th)/C11 | 0.000197701 | -0.00066314 | 0.001232737 | 0.007456016 |
| J(20th)/C12 | 0.000177054 | 0.000409082 | -0.00122744 | -0.00218295 |
| K(22th)/C13 | -0.00010596 | 0.000163728 | 0.000171906 | 0.002065772 |
| L(24th)/C14 | -7.40E-05 | -1.57E-04 | 8.32E-05 | -0.0007854 |
| M(26th)/C15 | 4.89E-05 | -9.34E-05 | -0.00015649 | 0.000190565 |
| N(28th)/C16 | 5.53E-06 | 2.73E-05 | 6.83E-06 | -0.00019272 |
| O(30th)/C17 | -7.04E-06 | 1.86E-05 | -4.81E-05 | 6.87E-05 |

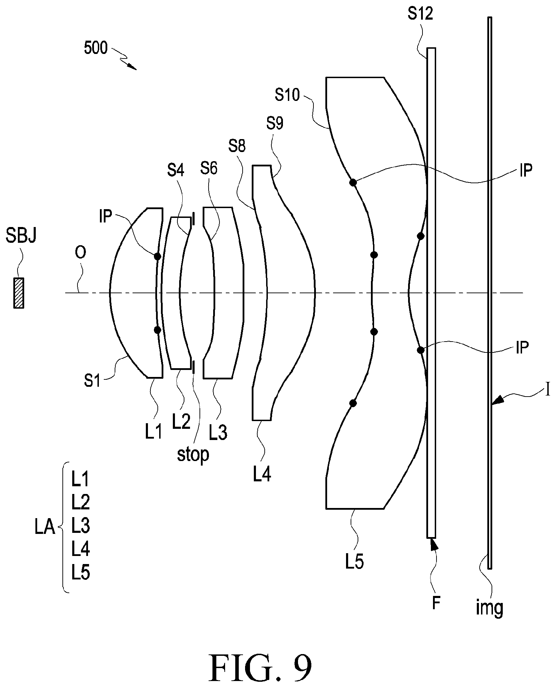

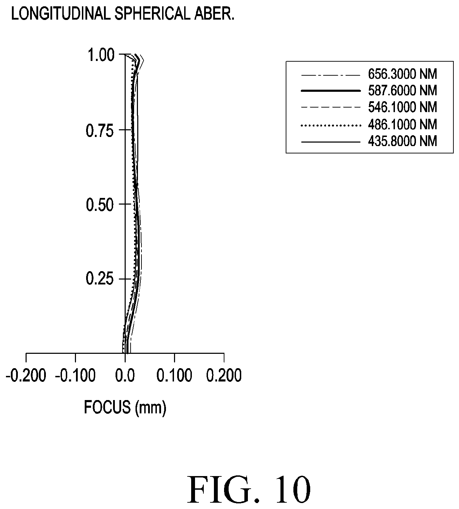

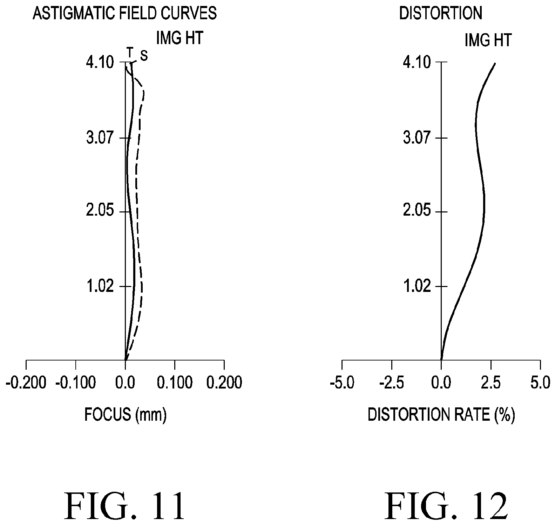

FIG. 9 is a diagram illustrating the image capturing device 500 and/or the lens assembly LA according to an embodiment of the disclosure. FIG. 10 is a graph illustrating spherical aberration of the lens assembly LA of FIG. 9 according to an embodiment of the disclosure. FIG. 11 is a graph illustrating astigmatism of the lens assembly LA of FIG. 9 according to an embodiment of the disclosure. FIG. 12 is a graph illustrating distortion of the lens assembly LA of FIG. 9 according to an embodiment of the disclosure.

The image capturing device 500 and/or its lens assembly LA of FIG. 9 may have a focal length of approximately 4.69mm and an F-number of approximately 1.88, and may realize a field of view of approximately 80 degrees. In an embodiment, the image capturing device 500 and/or its lens assembly LA may satisfy at least some of the above-described condition(s), be manufactured to the specifications illustrated in the following [Table 5], and have the aspherical coefficients of [Table 6], [Table 7], and [Table 8].

[Table 5]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 1.697 | 0.69 | 1.54392 | 55.92 |
| S2 | 6.685 | 0.1 | | |
| S3 | 10.613 | 0.257 | 1.6714 | 19.25 |
| S4(stop) | 4.647 | 0.289 | | |
| S5 | infinity | 0.219 | | |
| S6 | -9.052 | 0.43 | 1.6714 | 19.25 |
| S7 | -36.971 | 0.33 | | |
| S8 | -8.396 | 0.74 | 1.54392 | 55.92 |
| S9 | -2.219 | 0.83 | | |
| S10 | 3.092 | 0.568 | 1.53501 | 55.61 |
| S11 | 1.329 | 0.258 | | |
| S12 | infinity | 0.11 | 1.5168 | 64.17 |
| S13 | infinity | 0.775 | | |
| img | infinity | 0.015 | | |

[Table 6]

| Lens surface (Surf) | 1 ASP | 2 ASP | 3 ASP |
|---|---|---|---|
| Radius of curvature (Radius) | 1.69658094 | 6.68543895 | 10.6130204 |
| k(Conic) | 0.06190814 | 11.9733916 | 42.8904433 |
| A(4th)/C4 | 0.00753599 | -0.0234862 | 0.02882868 |
| B(6th)/C5 | -0.0024174 | -0.0012946 | 0.00993296 |
| C(8th)/C6 | -0.0024277 | -0.0018766 | 0.00057268 |
| D(10th)/C7 | -0.0011042 | -0.0003309 | 0.00044298 |
| E(12th)/C8 | -0.0004532 | -4.14E-05 | 8.35E-05 |
| F(14th)/C9 | -0.0001348 | -1.29E-05 | 2.34E-05 |
| G(16th)/C10 | -4.77E-05 | 8.46E-06 | 8.78E-07 |
| H(18th)/C11 | -5.64E-06 | -9.56E-06 | -2.65E-06 |
| J(20th)/C12 | -1.28E-06 | 1.08E-06 | -1.12E-07 |
| K(22th)/C13 | 0.00000E+00 | 0.00000E+00 | 0.00000E+00 |
| L(24th)/C14 | 0.00000E+00 | 0.00000E+00 | 0.00000E+00 |
| M(26th)/C15 | 0.00000E+00 | 0.00000E+00 | 0.00000E+00 |
| N(28th)/C16 | 0.00000E+00 | 0.00000E+00 | 0.00000E+00 |
| O(30th)/C17 | 0.00000E+00 | 0.00000E+00 | 0.00000E+00 |

[Table 7]

| Lens surface (Surf) | 4_ASP | 6_ASP | 7_ASP |
|---|---|---|---|
| Radius of curvature (Radius) | 4.64738424 | -9.052249 | -36.971059 |
| k(Conic) | -8.3879987 | -52.930838 | -100 |
| A(4th)/C4 | 0.05168327 | -0.1094426 | -0.1678988 |
| B(6th)/C5 | 0.00738326 | -0.0021366 | 0.01497447 |
| C(8th)/C6 | 0.00103386 | -0.000309 | 0.00239571 |
| D(10th)/C7 | 0.00036669 | -1.04E-05 | 1.75E-05 |
| E(12th)/C8 | 9.12E-05 | -3.49E-05 | -5.65E-05 |
| F(14th)/C9 | 1.93E-05 | 2.68E-06 | 6.07E-05 |
| G(16th)/C10 | 2.50E-06 | -4.50E-06 | 7.95E-07 |
| H(18th)/C11 | -1.42E-06 | -1.18E-06 | -2.18E-05 |
| J(20th)/C12 | -5.38E-06 | -9.76E-07 | -7.77E-06 |
| K(22th)/C13 | 0.00000E+00 | -4.08E-07 | 0.00000E+00 |
| L(24th)/C14 | 0.00000E+00 | -4.55E-06 | 0.00000E+00 |
| M(26th)/C15 | 0.00000E+00 | -9.95E-07 | 0.00000E+00 |
| N(28th)/C16 | 0.00000E+00 | -9.08E-07 | 0.00000E+00 |
| O(30th)/C17 | 0.00000E+00 | 6.32E-07 | 0.00000E+00 |

[Table 8]

| Lens surface (Surf) | 8_ASP | 9_ASP | 10_ASP | 11_ASP |
|---|---|---|---|---|
| Radius of curvature (Radius) | -8.3958737 | -2.2187944 | 3.09214175 | 1.32865506 |
| k(Conic) | -3.0934098 | -0.3695633 | -1.0486964 | -1.0036407 |
| A(4th)/C4 | -0.1110428 | 0.16359682 | -2.6516846 | -5.5937452 |
| B(6th)/C5 | 0.08862783 | 0.1433545 | 0.87276144 | 1.16206259 |
| C(8th)/C6 | -0.0148483 | -0.023112 | -0.2779702 | -0.3242373 |
| D(10th)/C7 | -0.005959 | -0.0122255 | 0.08098809 | 0.14854641 |
| E(12th)/C8 | 0.0040208 | 0.00413322 | -0.0256664 | -0.0631744 |
| F(14th)/C9 | 0.00018617 | 0.00307844 | 0.00658861 | 0.0222694 |
| G(16th)/C10 | -0.0011116 | -0.0016644 | -0.0029174 | -0.0154649 |
| H(18th)/C11 | 0.00030096 | -0.0006847 | 0.00161993 | 0.00536584 |
| J(20th)/C12 | 0.00018689 | 0.00051899 | -0.0006698 | -0.0027143 |
| K(22th)/C13 | -0.0001268 | 0.00019225 | 3.88E-06 | 0.0016828 |
| L(24th)/C14 | -5.10E-05 | -0.0001721 | 0.00011587 | -0.0005549 |
| M(26th)/C15 | 4.91E-05 | -9.24E-05 | -3.86E-05 | 0.00038361 |
| N(28th)/C16 | 2.95E-06 | 4.22E-05 | 1.13E-05 | -0.000144 |
| O(30th)/C17 | -4.22E-06 | 1.94E-05 | -1.82E-07 | 9.48E-05 |

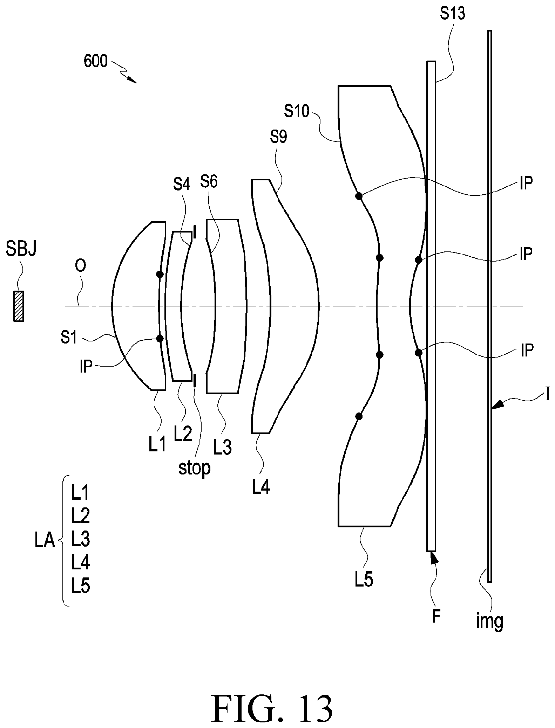

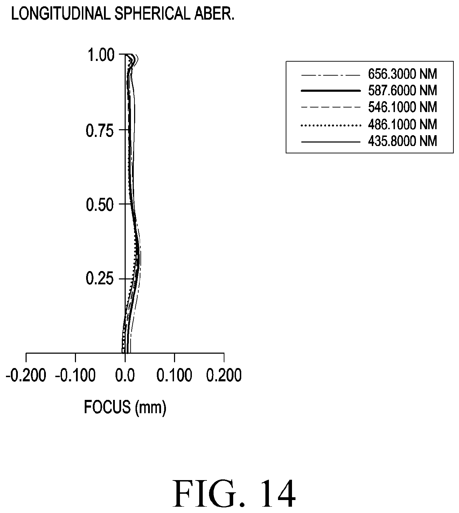

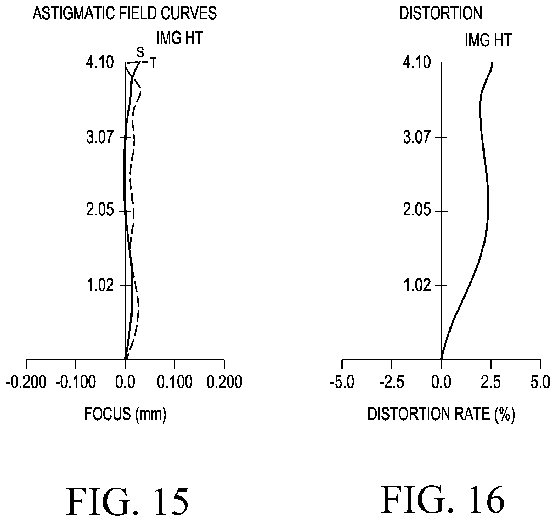

FIG. 13 is a diagram illustrating the image capturing device 600 and/or the lens assembly LA according to an embodiment of the disclosure. FIG. 14 is a graph illustrating spherical aberration of the lens assembly LA of FIG. 13 according to an embodiment of the disclosure. FIG. 15 is a graph illustrating astigmatism of the lens assembly LA of FIG. 13 according to an embodiment of the disclosure. FIG. 16 is a graph illustrating distortion of the lens assembly LA of FIG. 13 according to an embodiment of the disclosure.

The image capturing device 600 and/or its lens assembly LA of FIG. 13 may have a focal length of approximately 4.69mm and an F-number of approximately 1.88, and may realize a field of view of approximately 80 degrees. In an embodiment, the image capturing device 600 and/or its lens assembly LA may satisfy at least some of the above-described condition(s), be manufactured to the specifications illustrated in the following [Table 9], and have the aspherical coefficients of [Table 10], [Table 11], and [Table 12].

[Table 9]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 1.718 | 0.69 | 1.54392 | 55.92 |
| S2 | 7.199 | 0.099 | | |
| S3 | 10.671 | 0.227 | 1.6714 | 19.25 |
| S4(stop) | 4.588 | 0.29 | | |
| S5 | infinity | 0.222 | | |
| S6 | -12.204 | 0.459 | 1.6714 | 19.25 |
| S7 | -196.029 | 0.35 | | |
| S8 | -7.736 | 0.74 | 1.54392 | 55.92 |
| S9 | -2.174 | 0.858 | | |
| S10 | 2.705 | 0.5 | 1.53501 | 55.61 |
| S11 | 1.244 | 0.266 | | |
| S12 | infinity | 0.11 | 1.5168 | 64.17 |
| S13 | infinity | 0.781 | | |
| img | infinity | 0.009 | | |

[Table 10]

| Lens surface (Surf) | 1 ASP | 2 ASP | 3 ASP |
|---|---|---|---|
| Radius of curvature (Radius) | 1.718122595 | 7.198835877 | 10.67097322 |
| k(Conic) | 0.075545744 | 14.08466733 | 33.00764675 |
| A(4th)/C4 | 0.009229324 | -0.020806483 | 0.024776553 |
| B(6th)/C5 | -0.00208038 | 0.000171091 | 0.0125497 |
| C(8th)/C6 | -0.002123183 | -0.002130079 | 8.73E-05 |
| D(10th)/C7 | -0.001073391 | -0.000464283 | 0.000371482 |
| E(12th)/C8 | -0.000453368 | -8.82E-05 | 3.04E-05 |
| F(14th)/C9 | -0.000157417 | -1.99E-05 | 1.69E-05 |
| G(16th)/C10 | -5.58E-05 | 1.98E-05 | 7.22E-06 |
| H(18th)/C11 | -1.40E-05 | -1.38E-05 | -7.50E-06 |
| J(20th)/C12 | -5.87E-07 | 6.23E-08 | -3.61E-07 |
| K(22th)/C13 | 0.00000E+00 | 0.00000E+00 | 0.00000E+00 |
| L(24th)/C14 | 0.00000E+00 | 0.00000E+00 | 0.00000E+00 |
| M(26th)/C15 | 0.00000E+00 | 0.00000E+00 | 0.00000E+00 |
| N(28th)/C16 | 0.00000E+00 | 0.00000E+00 | 0.00000E+00 |
| O(30th)/C17 | 0.00000E+00 | 0.00000E+00 | 0.00000E+00 |

[Table 11]

| Lens surface (Surf) | 4_ASP | 6_ASP | 7_ASP |
|---|---|---|---|
| Radius of curvature (Radius) | 4.588251597 | -12.20386749 | -196.0292426 |
| k(Conic) | -12.9083559 | 2.130244204 | 100 |
| A(4th)/C4 | 0.048720601 | -0.100623486 | -0.165863215 |
| B(6th)/C5 | 0.008876139 | -0.000221119 | 0.02399062 |
| C(8th)/C6 | 0.001105577 | 0.000423776 | 0.004431733 |
| D(10th)/C7 | 0.000439796 | 5.27E-05 | -4.64E-05 |
| E(12th)/C8 | 0.000106583 | 3.27E-05 | 6.52E-05 |
| F(14th)/C9 | 3.37E-05 | -1.06E-05 | -4.16E-05 |
| G(16th)/C10 | 1.01E-05 | 4.12E-06 | -2.43E-05 |
| H(18th)/C11 | -3.23E-06 | -1.78E-05 | -5.15E-05 |
| J(20th)/C12 | -3.12E-06 | -1.23E-06 | 1.81E-05 |
| K(22th)/C13 | 0.00000E+00 | -5.81E-06 | 1.67E-07 |
| L(24th)/C14 | 0.00000E+00 | -1.12E-06 | 4.05E-06 |
| M(26th)/C15 | 0.00000E+00 | -2.63E-06 | -1.94E-06 |
| N(28th)/C16 | 0.00000E+00 | -5.22E-07 | -3.37E-06 |
| O(30th)/C17 | 0.00000E+00 | 6.41E-07 | -2.74E-06 |

[Table 12]

| Lens surface (Surf) | 8_ASP | 9_ASP | 10_ASP | 11_ASP |
|---|---|---|---|---|
| Radius of curvature (Radius) | -7.736410481 | -2.17423149 | 2.704734998 | 1.243924765 |
| k(Conic) | 5.646950229 | -0.270240089 | -1.202087586 | -0.998128178 |
| A(4th)/C4 | -0.14274124 | 0.139882581 | -2.941610713 | -6.211700912 |
| B(6th)/C5 | 0.069831202 | 0.106340622 | 1.035604179 | 1.387664409 |
| C(8th)/C6 | -0.008266838 | -0.025371898 | -0.359121129 | -0.381429144 |
| D(10th)/C7 | -0.005752064 | -0.010947085 | 0.120888409 | 0.177395535 |
| E(12th)/C8 | 0.00298658 | 0.004155471 | -0.042368841 | -0.081844542 |
| F(14th)/C9 | 0.000451925 | 0.002419008 | 0.010519984 | 0.024290844 |
| G(16th)/C10 | -0.000960792 | -0.001688619 | -0.003589086 | -0.020199992 |
| H(18th)/C11 | 0.000101317 | -0.000630102 | 0.001914513 | 0.007521394 |
| J(20th)/C12 | 0.000200636 | 0.000442529 | -0.001530632 | -0.002846885 |
| K(22th)/C13 | -4.70E-05 | 0.000160797 | 0.000109024 | 0.002231221 |
| L(24th)/C14 | -8.60E-05 | -0.000152226 | 0.000110124 | -0.000944766 |
| M(26th)/C15 | 3.41E-05 | -8.40E-05 | -0.000135691 | 0.000353192 |
| N(28th)/C16 | 8.26E-06 | 2.71E-05 | -2.20E-05 | -0.00010994 |
| O(30th)/C17 | -3.16E-06 | 1.39E-05 | -3.58E-05 | 0.00017179 |

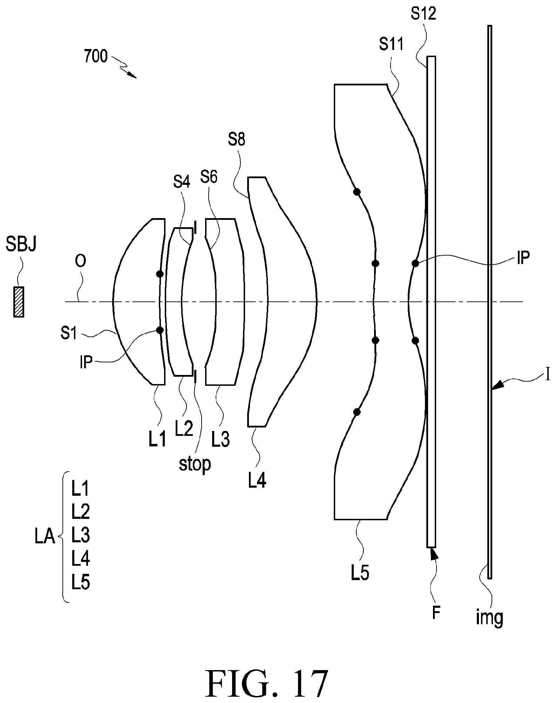

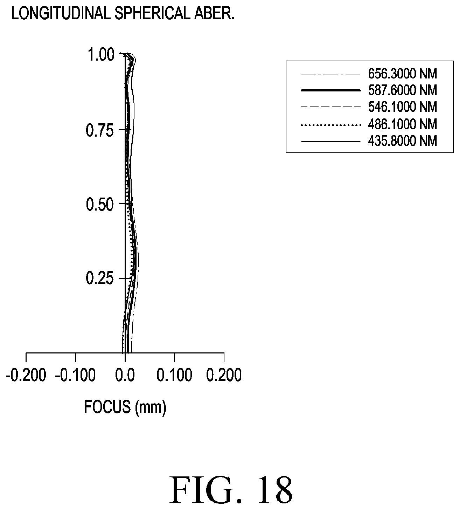

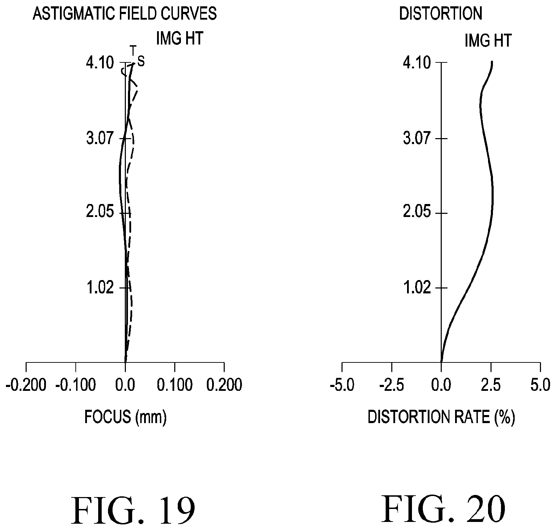

FIG. 17 is a diagram illustrating the image capturing device 700 and/or the lens assembly LA according to an embodiment of the disclosure. FIG. 18 is a graph illustrating spherical aberration of the lens assembly LA of FIG. 17 according to an embodiment of the disclosure. FIG. 19 is a graph illustrating astigmatism of the lens assembly LA of FIG. 17 according to an embodiment of the disclosure. FIG. 20 is a graph illustrating distortion of the lens assembly LA of FIG. 17 according to an embodiment of the disclosure.

The image capturing device 700 and/or its lens assembly LA of FIG. 17 may have a focal length of approximately 4.69mm and an F-number of approximately 1.88, and may realize a field of view of approximately 80 degrees. In an embodiment, the image capturing device 700 and/or its lens assembly LA may satisfy at least some of the above-described condition(s), be manufactured to the specifications illustrated in the following [Table 13], and have the aspherical coefficients of [Table 14], [Table 15], and [Table 16].

[Table 13]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 1.708 | 0.698 | 1.54392 | 55.92 |
| S2 | 7.141 | 0.1 | | |
| S3 | 11.066 | 0.233 | 1.6714 | 19.25 |
| S4(stop) | 4.619 | 0.28 | | |
| S5 | infinity | 0.214 | | |
| S6 | -10.455 | 0.433 | 1.6714 | 19.25 |
| S7 | -48.437 | 0.337 | | |
| S8 | -7.049 | 0.74 | 1.54392 | 55.92 |
| S9 | -2.214 | 0.864 | | |
| S10 | 2.618 | 0.527 | 1.53501 | 55.61 |
| S11 | 1.261 | 0.274 | | |
| S12 | infinity | 0.11 | 1.5168 | 64.17 |
| S13 | infinity | 0.785 | | |
| img | infinity | 0.005 | | |

[Table 14]

| Lens surface (Surf) | 1_ASP | 2_ASP | 3_ASP |
|---|---|---|---|
| Radius of curvature (Radius) | 1.708274712 | 7.140585564 | 11.06579295 |
| k(Conic) | 0.074712489 | 13.08836162 | 35.80509776 |
| A(4th)/C4 | 0.009245161 | -0.022329941 | 0.026119442 |
| B(6th)/C5 | -0.002254117 | -0.000794355 | 0.012134379 |
| C(8th)/C6 | -0.002368384 | -0.002059116 | 0.000404027 |
| D(10th)/C7 | -0.001152955 | -0.000388379 | 0.000478261 |
| E(12th)/C8 | -0.000488161 | -5.35E-05 | 6.58E-05 |
| F(14th)/C9 | -0.000155974 | -2.00E-05 | 1.67E-05 |
| G(16th)/C10 | -5.31E-05 | 1.33E-05 | 1.25E-06 |
| H(18th)/C11 | -8.62E-06 | -1.62E-05 | -9.29E-06 |
| J(20th)/C12 | -1.45E-06 | 1.43E-06 | -2.57E-06 |
| K(22th)/C13 | 0.00000E+00 | 0.00000E+00 | 0.00000E+00 |
| L(24th)/C14 | 0.00000E+00 | 0.00000E+00 | 0.00000E+00 |
| M(26th)/C15 | 0.00000E+00 | 0.00000E+00 | 0.00000E+00 |
| N(28th)/C16 | 0.00000E+00 | 0.00000E+00 | 0.00000E+00 |
| O(30th)/C17 | 0.00000E+00 | 0.00000E+00 | 0.00000E+00 |

[Table 15]

| Lens surface (Surf) | 4_ASP | 6_ASP | 7_ASP |
|---|---|---|---|
| Radius of curvature (Radius) | 4.618533407 | -10.45525048 | -48.43706139 |
| k(Conic) | -11.75809737 | 16.71342745 | -100 |
| A(4th)/C4 | 0.049970803 | -0.09894415 | -0.159299205 |
| B(6th)/C5 | 0.00899791 | -0.000166784 | 0.025745624 |
| C(8th)/C6 | 0.00130841 | 0.000354671 | 0.003386394 |
| D(10th)/C7 | 0.000492719 | 2.05E-05 | -0.000334707 |
| E(12th)/C8 | 0.000131212 | 3.50E-05 | 4.77E-05 |
| F(14th)/C9 | 3.48E-05 | -8.53E-06 | 4.42E-05 |
| G(16th)/C10 | 3.35E-06 | 8.50E-06 | -1.37E-05 |
| H(18th)/C11 | -1.06E-05 | -2.15E-05 | -5.05E-05 |
| J(20th)/C12 | -5.47E-06 | -3.04E-06 | 1.21E-05 |
| K(22th)/C13 | 0.00000E+00 | -8.08E-06 | 5.22E-06 |
| L(24th)/C14 | 0.00000E+00 | -2.08E-06 | 6.16E-06 |
| M(26th)/C15 | 0.00000E+00 | -3.97E-06 | -2.54E-06 |
| N(28th)/C16 | 0.00000E+00 | 9.33E-07 | -3.63E-06 |
| O(30th)/C17 | 0.00000E+00 | 6.50E-07 | -2.15E-06 |

[Table 16]

| Lens surface (Surf) | 8_ASP | 9_ASP | 10_ASP | 11_ASP |
|---|---|---|---|---|
| Radius of curvature (Radius) | -7.049105495 | -2.213998869 | 2.617929194 | 1.260961884 |
| k(Conic) | 2.383818308 | -0.214100588 | -1.286992155 | -0.999492755 |
| A(4th)/C4 | -0.131268048 | 0.104339918 | -2.96172467 | -6.087812052 |
| B(6th)/C5 | 0.079387072 | 0.123574935 | 1.043453223 | 1.333097451 |
| C(8th)/C6 | -0.013505339 | -0.02465273 | -0.347730503 | -0.35001394 |
| D(10th)/C7 | -0.006576 | -0.013141251 | 0.107556042 | 0.166902062 |
| E(12th)/C8 | 0.003869882 | 0.003344795 | -0.036884007 | -0.076938175 |
| F(14th)/C9 | 0.000440447 | 0.002920939 | 0.009712018 | 0.020969098 |
| G(16th)/C10 | -0.001038419 | -0.001424532 | -0.003062808 | -0.018038164 |
| H(18th)/C11 | 0.000141009 | -0.00068348 | 0.001380764 | 0.006834654 |
| J(20th)/C12 | 0.00022307 | 0.000398472 | -0.001185974 | -0.002148387 |
| K(22th)/C13 | -9.05E-05 | 0.000200036 | 0.000148572 | 0.001990949 |
| L(24th)/C14 | -7.26E-05 | -0.000137158 | 0.000125256 | -0.000736344 |
| M(26th)/C15 | 3.40E-05 | -9.84E-05 | -0.000151074 | 0.000189189 |
| N(28th)/C16 | 7.51E-06 | 9.74E-06 | 1.51E-05 | -0.000148244 |
| O(30th)/C17 | -4.61E-06 | 1.77E-05 | -3.53E-05 | 7.70E-05 |

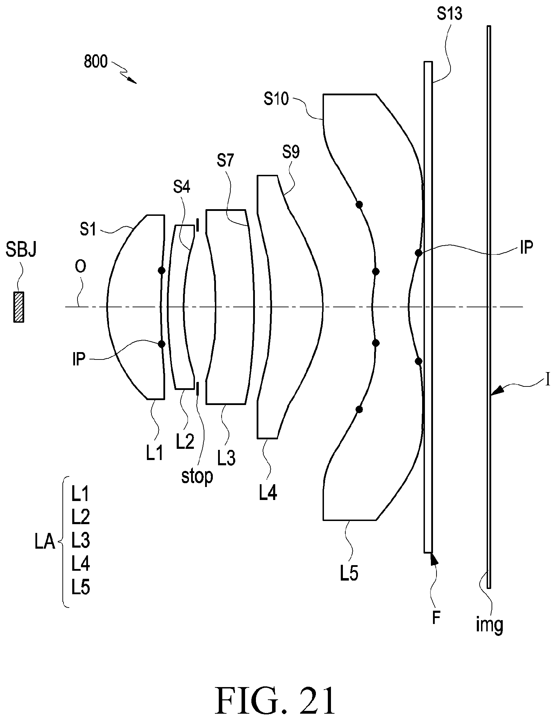

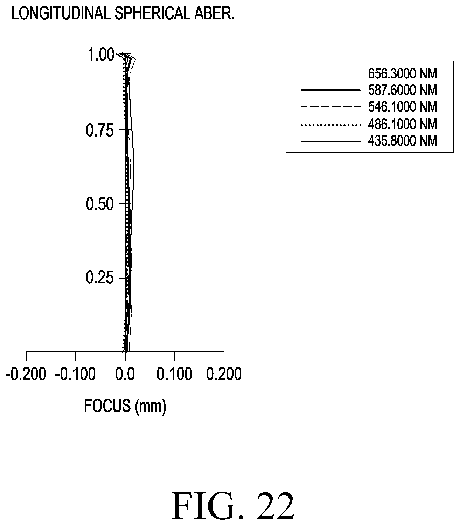

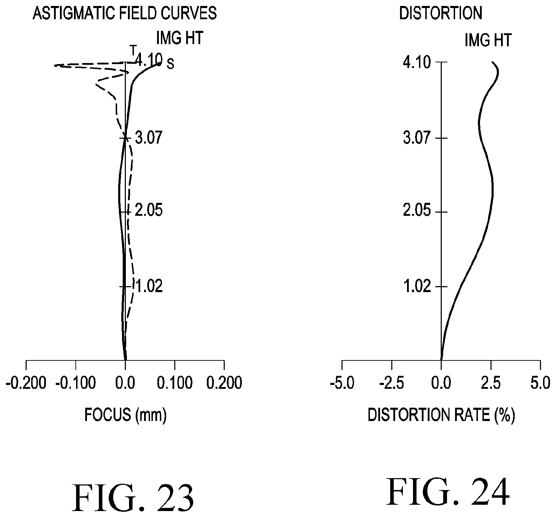

FIG. 21 is a diagram illustrating the image capturing device 800 and/or the lens assembly LA according to an embodiment of the disclosure. FIG. 22 is a graph illustrating spherical aberration of the lens assembly LA of FIG. 21 according to an embodiment of the disclosure. FIG. 23 is a graph illustrating astigmatism of the lens assembly LA of FIG. 21 according to an embodiment of the disclosure. FIG. 24 is a graph illustrating distortion of the lens assembly LA of FIG. 21 according to an embodiment of the disclosure.

The image capturing device 800 and/or its lens assembly LA of FIG. 21 may have a focal length of approximately 4.69mm and an F-number of approximately 1.79, and may realize a field of view of approximately 80 degrees. In an embodiment, the image capturing device 700 and/or its lens assembly LA may satisfy at least some of the above-described condition(s), be manufactured to the specifications illustrated in the following [Table 17], and have the aspherical coefficients of [Table 18], [Table 19], and [Table 20].

[Table 17]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 1.750 | 0.813 | 1.54392 | 55.92 |
| S2 | 10.466 | 0.100 | | |
| S3 | 14.571 | 0.227 | 1.6714 | 19.25 |
| S4(stop) | 4.541 | 0.270 | | |
| S5 | infinity | 0.200 | | |
| S6 | -19.492 | 0.548 | 1.6714 | 19.25 |
| S7 | 54.587 | 0.255 | | |
| S8 | -7.331 | 0.755 | 1.54392 | 55.92 |
| S9 | -2.146 | 0.763 | | |
| S10 | 3.321 | 0.532 | 1.53501 | 55.61 |
| S11 | 1.350 | 0.237 | | |
| S12 | infinity | 0.110 | 1.5168 | 64.17 |
| S13 | infinity | 0.787 | | |
| img | infinity | 0.003 | | |

[Table 18]

| Lens surface (Surf) | 1_ASP | 2_ASP | 3_ASP |
|---|---|---|---|
| Radius of curvature (Radius) | 1.75018E+00 | 1.04656E+01 | 1.45712E+01 |
| k(Conic) | 2.41162E-02 | 1.70125E+01 | 6.48236E+01 |
| A(4th)/C4 | -6.80642E-03 | -2.05002E-02 | -3.81625E-02 |
| B(6th)/C5 | 5.60919E-02 | -5.71196E-02 | 1.55539E-01 |
| C(8th)/C6 | -1.31142E-01 | 9.94548E-01 | -9.95209E-01 |
| D(10th)/C7 | -5.16871E-01 | -6.72558E+00 | 8.02902E+00 |
| E(12th)/C8 | 4.84048E+00 | 2.90996E+01 | -4.30099E+01 |
| F(14th)/C9 | -1.70648E+01 | -8.61268E+01 | 1.52594E+02 |
| G(16th)/C10 | 3.60443E+01 | 1.79157E+02 | -3.72338E+02 |
| H(18th)/C11 | -5.06382E+01 | -2.65660E+02 | 6.40038E+02 |
| J(20th)/C12 | 4.90939E+01 | 2.81788E+02 | -7.82252E+02 |
| K(22th)/C13 | -3.30761E+01 | -2.12007E+02 | 6.76244E+02 |
| L(24th)/C14 | 1.52335E+01 | 1.10398E+02 | -4.04256E+02 |
| M(26th)/C15 | -4.57894E+00 | -3.78131E+01 | 1.59000E+02 |
| N(28th)/C16 | 8.09940E-01 | 7.66004E+00 | -3.70242E+01 |
| O(30th)/C17 | -6.39642E-02 | -6.95099E-01 | 3.86760E+00 |

[Table 19]

| Lens surface (Surf) | 4_ASP | 6_ASP | 7_ASP |
|---|---|---|---|
| Radius of curvature (Radius) | 4.54135E+00 | -1.94922E+01 | 5.45873E+01 |
| k(Conic) | -1.20293E+01 | 7.47792E+01 | -1.00000E+02 |
| A(4th)/C4 | -1.21802E-03 | -7.65957E-02 | -8.30725E-02 |
| B(6th)/C5 | 1.42819E-01 | -4.58484E-01 | -1.90771E-03 |
| C(8th)/C6 | -4.84774E-01 | 5.99168E+00 | -5.71096E-02 |
| D(10th)/C7 | -1.79350E+00 | -4.70398E+01 | 8.98652E-01 |
| E(12th)/C8 | 4.43150E+01 | 2.41572E+02 | -4.48390E+00 |
| F(14th)/C9 | -3.10469E+02 | -8.50483E+02 | 1.27340E+01 |
| G(16th)/C10 | 1.24452E+03 | 2.10697E+03 | -2.33866E+01 |
| H(18th)/C11 | -3.24584E+03 | -3.71855E+03 | 2.93537E+01 |
| J(20th)/C12 | 5.76305E+03 | 4.67729E+03 | -2.57151E+01 |
| K(22th)/C13 | -7.04490E+03 | -4.14092E+03 | 1.57185E+01 |
| L(24th)/C14 | 5.84777E+03 | 2.50476E+03 | -6.57099E+00 |
| M(26th)/C15 | -3.15237E+03 | -9.76756E+02 | 1.79062E+00 |
| N(28th)/C16 | 9.96306E+02 | 2.18434E+02 | -2.86608E-01 |
| O(30th)/C17 | -1.40192E+02 | -2.08319E+01 | 2.04398E-02 |

[Table 20]

| Lens surface (Surf) | 8_ASP | 9_ASP | 10_ASP | 11_ASP |
|---|---|---|---|---|
| Radius of curvature (Radius) | -7.33109E+00 | -2.14588E+00 | 3.32100E+00 | 1.34954E+00 |
| k(Conic) | -1.63933E+01 | -4.53552E-01 | -1.04869E+00 | -1.00923E+00 |
| A(4th)/C4 | -5.92576E-02 | -6.45847E-02 | -3.01239E-01 | -3.28007E-01 |
| B(6th)/C5 | -4.64951E-02 | 1.85797E-01 | 2.19309E-01 | 2.60415E-01 |
| C(8th)/C6 | 2.33741E-01 | -5.91824E-01 | -1.65682E-01 | -1.83075E-01 |
| D(10th)/C7 | -7.27429E-01 | 1.37970E+00 | 1.22665E-01 | 1.02510E-01 |
| E(12th)/C8 | 1.56504E+00 | -2.24445E+00 | -7.70615E-02 | -4.40835E-02 |
| F(14th)/C9 | -2.41473E+00 | 2.59711E+00 | 3.77392E-02 | 1.43742E-02 |
| G(16th)/C10 | 2.76369E+00 | -2.17293E+00 | -1.38419E-02 | -3.54026E-03 |
| H(18th)/C11 | -2.29499E+00 | 1.32796E+00 | 3.73340E-03 | 6.56395E-04 |
| J(20th)/C12 | 1.34625E+00 | -5.91991E-01 | -7.31796E-04 | -9.09242E-05 |
| K(22th)/C13 | -5.46312E-01 | 1.89787E-01 | 1.02680E-04 | 9.26377E-06 |
| L(24th)/C14 | 1.49306E-01 | -4.24747E-02 | -1.00382E-05 | -6.74258E-07 |
| M(26th)/C15 | -2.61496E-02 | 6.28186E-03 | 6.49366E-07 | 3.32205E-08 |
| N(28th)/C16 | 2.64351E-03 | -5.50602E-04 | -2.49943E-08 | -9.94375E-10 |
| O(30th)/C17 | -1.16933E-04 | 2.16269E-05 | 4.33605E-10 | 1.36760E-11 |

Regarding the conditions presented through the above-described [Equations], values calculated by the lens data of the image capturing devices 400, 500, 600, 700, and 800 and/or the lens assembly LA of FIG. 5, FIG. 9, FIG. 13, FIG. 17, and/or FIG. 21 are illustrated in [Table 21] below.

[Table 21]

|  | Embodiment of FIG. 5 | Embodiment of FIG. 9 | Embodiment of FIG. 13 | Embodiment of FIG. 17 | Embodiment of FIG. 21 |
|---|---|---|---|---|---|
| Equation 1 | 2.43 | 2.28 | 2.36 | 2.43 | 2.17 |
| Equation 2 | 0.68 | 0.68 | 0.68 | 0.68 | 0.68 |
| Equation 3 | 1.8 | 1.8 | 1.8 | 1.8 | 1.7 |
| Equation 4 | 40 | 40 | 40 | 40 | 40 |
| Equation 5 | 0.167 | 0.167 | 0.167 | 0.167 | 0.169 |
| Equation 6 | 0.516 | 0.582 | 0.561 | 0.522 | 0.547 |
| Equation 7 | 0.32 | 0.36 | 0.33 | 0.34 | 0.39 |
| Equation 8 | 0.42 | 0.428 | 0.417 | 0.421 | 0.46 |

As described above, an image capturing device (e.g., the image capturing device 400, 500, 600, 700, and/or 800 of FIG. 5, FIG. 9, FIG. 13, FIG. 17, and/or FIG. 21) according to embodiment(s) of the disclosure and/or an electronic device (e.g., the electronic device 101, 102, 104, and/or 300 of FIG. 1, FIG. 3, and/or FIG. 4) including the same may provide optical performance suitable for a high-pixel and/or large-scale image sensor by satisfying at least one of the above-described conditions. According to an embodiment, the image capturing device and/or the electronic device including the same may be miniaturized while maintaining favorable macro photography performance using the high-pixel and/or large-scale image sensor.

The effects obtainable from the disclosure are not limited to the effects mentioned above, and other effects not mentioned will be clearly understood by those skilled in the art from the description of the foregoing embodiment(s).

According to an embodiment of the disclosure, an image capturing device (e.g., the image capturing device 400, 500, 600, 700, or 800 of FIG. 5, FIG. 9, FIG. 13, FIG. 17, and/or FIG. 21) may include an image sensor (e.g., the image sensor I or 230 of FIG. 5, FIG. 9, FIG. 13, FIG. 17, and/or FIG. 21), and a lens assembly (e.g., the lens assembly LA of FIG. 5, FIG. 9, FIG. 13, FIG. 17, and/or FIG. 21) configured to focus or guide light to the image sensor by including at least five lenses (e.g., the lenses L1, L2, L3, L4, and L5 of FIG. 5, FIG. 9, FIG. 13, FIG. 17, and/or FIG. 21) sequentially arranged along an optical axis (e.g., the optical axis O of FIG. 5, FIG. 9, FIG. 13, FIG. 17, and/or FIG. 21) from a first lens (e.g., the first lens L1 of FIG. 5, FIG. 9, FIG. 13, FIG. 17, and/or FIG. 21) farthest from the image sensor. In an embodiment, the lens assembly or the at least five lenses may include the first lens having a positive refractive power, a second lens (e.g., the second lens L2 of FIG. 5, FIG. 9, FIG. 13, FIG. 17, and/or FIG. 21) disposed between the first lens and the image sensor and having a negative refractive power, a third lens (e.g., the third lens L3 of FIG. 5, FIG. 9, FIG. 13, FIG. 17, and/or FIG. 21) disposed between the second lens and the image sensor and having a negative refractive power, a fourth lens (e.g., the fourth lens L4 of FIG. 5, FIG. 9, FIG. 13, FIG. 17, and/or FIG. 21) having a meniscus shape that is convex toward the image sensor and has a thickness decreasing toward an edge of the fourth lens, disposed between the third lens and the image sensor, and having a positive refractive power, and a fifth lens (e.g., the fifth lens L5 of FIG. 5, FIG. 9, FIG. 13, FIG. 17, and/or FIG. 21) having a shape that includes a convex subject-side surface (e.g., the surface indicated by 'S10' in FIG. 5) and a concave sensor-side surface (e.g., the surface indicated by 'S11' in FIG. 5) in a chief region of the fifth lens, disposed between the fourth lens and the image sensor, and having a negative refractive power. In an embodiment, the lens assembly may satisfy the following [Conditional Expression 1].

[Conditional Expression 1]

$$1.5 =< (T34+T45)/T23 =< 3$$

Herein, 'T23' may be an air gap between the second lens and the third lens, measured on the optical axis, 'T34' may be an air gap between the third lens and the fourth lens, measured on the optical axis, and 'T45' may be an air gap between the fourth lens and the fifth lens, measured on the optical axis.

According to an embodiment, at least one of the at least five lenses may be a plastic lens.

According to an embodiment, the lens assembly may satisfy the following [Conditional Expression 2].

[Conditional Expression 2]

$$0.6 =< OAL/(ImgH*2) =< 0.69$$

Herein, 'OAL' may be a distance from a subject-side surface (e.g., the surface indicated by 'S1' in FIG. 5) of the first lens to the image sensor, measured on the optical axis, and 'ImgH' may be a maximum image height of the image sensor. The maximum image height of the image sensor may refer to a maximum length from a point crossing the optical axis to an edge of an imaging plane or the image sensor.

According to an embodiment, the lens assembly may satisfy the following [Conditional Expressions 3 and 4].

[Conditional Expression 3]

$$1.7 =< Fno =< 1.9$$

[Conditional expression 4]

$$35 \text{ degrees} =< HFOV =< 45 \text{ degrees}$$

Herein, 'Fno' may be an F-number of the lens assembly, and 'HFOV' may be a half field of view.

According to an embodiment, the lens assembly may satisfy the following [Conditional Expression 5].

[Conditional Expression 5]

$$T4/TA =< 0.17$$

Herein, 'T4' may be a thickness of the fourth lens measured on the optical axis, and 'TA' may be a distance from the subject-side surface of the first lens to a sensor-side surface of the fifth lens, measured on the optical axis.

According to an embodiment, the lens assembly may satisfy the following [Conditional Expression 6].

[Conditional Expression 6]

$$0 =< (R7-R8)/(R7+R8) =< 1$$

Herein, 'R7' may be a radius of curvature of a point crossing the optical axis on a subject-side surface (e.g., the surface indicated by 'S8' in FIG. 5) of the fourth lens, and 'R8' may be a radius of curvature of a point crossing the optical axis on a sensor-side surface (e.g., the surface indicated by 'S9' in FIG. 5) of the fourth lens.

According to an embodiment, the lens assembly may satisfy the following [Conditional Expression 7].

[Conditional Expression 7]

$$0.3 =< Et4/T4 =< 0.5$$

Herein, 'Et4' may be an edge thickness of the fourth lens measured parallel to the optical axis, and 'T4' may be a thickness of the fourth lens measured on the optical axis.

According to an embodiment, the lens assembly may further include an aperture stop (e.g., the aperture stop, stop of FIG. 5, FIG. 9, FIG. 13, FIG. 17, and/or FIG. 21) disposed between the first lens and the third lens. When including the aperture stop, the lens assembly may satisfy the following [Conditional Expression 8].

[Conditional Expression 8]

$$0.1 =< ST/SL =< 0.5$$

Herein, 'ST' may be a distance from the subject-side surface of the first lens to the aperture stop, measured on the optical axis, and 'SL' may be a distance from the aperture stop to the sensor-side surface of the fifth lens, measured on the optical axis.

According to an embodiment, the second lens may have a refractive index of 1.6 or more.

According to an embodiment, the first lens may include a convex subject-side surface and a sensor-side surface (e.g., the surface indicated by 'S2' in FIG. 5) that is concave in a chief region of the first lens and convex in a marginal region of the first lens.

According to an embodiment, the third lens may have a meniscus shape convex toward the image sensor and a refractive index of 1.6 or more.

According to an embodiment, the fifth lens may have a convex shape inclined toward a subject side in a marginal region of the fifth lens around the chief region of the fifth lens. Therefore, the fifth lens may include at least one inflection point (e.g., the inflection point(s) IP of FIG. 5, FIG. 9, FIG. 13, FIG. 17, and/or FIG. 21).

According to an embodiment, the lens assembly may further include an IR cut filter (e.g., the IR cut filter F of FIG. 5, FIG. 9, FIG. 13, FIG. 17, and/or FIG. 21) disposed between the fifth lens and the image sensor.

According to an embodiment of the disclosure, an electronic device (e.g., the electronic device 101, 102, 104, or 300 of FIG. 1, FIG. 3, and/or FIG. 4) may include an image sensor (e.g., the image sensor I or 230 of FIG. 5, FIG. 9, FIG. 13, FIG. 17, and/or FIG. 21), a lens assembly (e.g., the lens assembly LA of FIG. 5, FIG. 9, FIG. 13, FIG. 17, and/or FIG. 21) configured to focus or guide light to the image sensor by including at least five lenses (e.g., the lenses L1, L2, L3, L4, and L5 of FIG. 5, FIG. 9, FIG. 13, FIG. 17, and/or FIG. 21) sequentially arranged along an optical axis (e.g., the optical axis O of FIG. 5, FIG. 9, FIG. 13, FIG. 17, and/or FIG. 21) from a first lens (e.g., the first lens L1 of FIG. 5, FIG. 9, FIG. 13, FIG. 17, and/or FIG. 21) farthest from the image sensor, a processor (e.g., the processor 120 of FIG. 1), and memory (e.g., the memory 130 of FIG. 1) storing instructions that, when executed by the processor, cause the electronic device to receive light using the image sensor. In an embodiment, the lens assembly or the at least five lenses may include the first lens having a positive refractive power, a second lens (e.g., the second lens L2 of FIG. 5, FIG. 9, FIG. 13, FIG. 17, and/or FIG. 21) disposed between the first lens and the image sensor and having a negative refractive power, a third lens (e.g., the third lens L3 of FIG. 5, FIG. 9, FIG. 13, FIG. 17, and/or FIG. 21) disposed between the second lens and the image sensor and having a negative refractive power, a fourth lens (e.g., the fourth lens L4 of FIG. 5, FIG. 9, FIG. 13, FIG. 17, and/or FIG. 21) having a meniscus shape that is convex toward the image sensor and has a thickness decreasing toward an edge of the fourth lens, disposed between the third lens and the image sensor, and having a positive refractive power, and a fifth lens (e.g., the fifth lens L5 of FIG. 5, FIG. 9, FIG. 13, FIG. 17, and/or FIG. 21) having a shape that includes a convex subject-side surface (e.g., the surface indicated by 'S10' in FIG. 5) and a concave sensor-side surface (e.g., the surface indicated by 'S11' in FIG. 5) in a chief region of the fifth lens, disposed between the fourth lens and the image sensor, and having a negative refractive power. In an embodiment, the electronic device and/or the lens assembly may satisfy the following [Conditional Expressions 1 and 2].

[Conditional Expression 1]

$$1.5 =< (T34+T45)/T23 =< 3$$

[Conditional Expression 2]

$$0.6 =< OAL/(ImgH*2) =< 0.69$$

Herein, 'T23' may be an air gap between the second lens and the third lens, measured on the optical axis, 'T34' may be an air gap between the third lens and the fourth lens, measured on the optical axis, 'T45' may be an air gap between the fourth lens and the fifth lens, measured on the optical axis, 'OAL' may be a distance from a subject-side surface of the first lens to the image sensor, measured on the optical axis, and 'ImgH' may be a maximum image height of the image sensor.

According to an embodiment, at least one of the at least five lenses may be a plastic lens.

According to an embodiment, the lens assembly may satisfy the following [Conditional Expressions 3 and 4].

[Conditional Expression 3]

$$1.7 =< Fno =< 1.9$$

[Conditional expression 4]

$$35 \text{ degrees} = < HFOV = < 45 \text{ degrees}$$

Herein, 'Fno' may be an F-number of the lens assembly, and 'HFOV' may be a half field of view.

According to an embodiment, the lens assembly may satisfy the following [Conditional Expressions 5, 6 and 7].

[Conditional Expression 5]

$$T4/TA =< 0.17$$

[Conditional Expression 6]

$$0 =< (R7-R8)/(R7+R8) =< 1$$

[Conditional Expression 7]

$$0.3 =< Et4/T4 =< 0.5$$

Herein, 'T4' may be a thickness of the fourth lens measured on the optical axis, 'TA' may be a distance from the subject-side surface (e.g., the surface indicated by 'S1' in FIG. 5) of the first lens to a sensor-side surface (e.g., the surface indicated by 'S11' in FIG. 5) of the fifth lens, measured on the optical axis, 'R7' may be a radius of curvature of a point crossing the optical axis on a subject-side surface (e.g., the surface indicated by 'S8' in FIG. 5) of the fourth lens, 'R8' may be a radius of curvature of a point crossing the optical axis on a sensor-side surface of the fourth lens, 'Et4' may be an edge thickness of the fourth lens measured parallel to the optical axis, and 'T4' may be a thickness of the fourth lens measured on the optical axis.

According to an embodiment, the lens assembly may further include an aperture stop (e.g., the aperture stop, stop of FIG. 5, FIG. 9, FIG. 13, FIG. 17, and/or FIG. 21) disposed between the first lens and the third lens. When including the aperture stop, the lens assembly may satisfy the following [Conditional Expression 8].

[Conditional Expression 8]

$$0.1 =< ST/SL =< 0.5$$

Herein, 'ST' may be a distance from the subject-side surface of the first lens to the aperture stop, measured on the optical axis, and 'SL' may be a distance from the aperture stop to the sensor-side surface of the fifth lens, measured on the optical axis.

According to an embodiment, the first lens may include a convex subject-side surface and a sensor-side surface that is concave in a chief region of the first lens and convex in a marginal region of the first lens.

According to an embodiment, the fifth lens may include at least one inflection point by having a convex shape inclined toward a subject side in a marginal region of the fifth lens around the chief region of the fifth lens.

While the disclosure has been described with reference to an exemplary embodiment, it should be understood that the embodiment is intended for illustration purposes and does not limit the scope of the disclosure. It will be apparent to those skilled in the art that various changes in form and details may be made without departing from the overall scope of the disclosure, including the appended claims and their equivalents.

**Claims**

1. An image capturing device (180; 280; 305; 312; 313; 400; 500; 600; 700; 800) comprising:

an image sensor (I; 230); and
a lens assembly (LA) configured to focus or guide light to the image sensor by including at least five lenses (L1, L2, L3, L4, L5) sequentially arranged along an optical axis (O) from a first lens (L1) farthest from the image sensor, wherein the lens assembly or the at least five lenses include:

the first lens having a positive refractive power;
a second lens (L2) disposed between the first lens and the image sensor and having a negative refractive power;
a third lens (L3) disposed between the second lens and the image sensor and having a negative refractive power;
a fourth lens (L4) having a meniscus shape that is convex toward the image sensor and has a thickness decreasing toward an edge of the fourth lens, disposed between the third lens and the image sensor, and having a positive refractive power; and

a fifth lens (L5) having a shape that includes a convex subject-side surface (S10) and a concave sensor-side surface in a chief region of the fifth lens, disposed between the fourth lens and the image sensor, and having a negative refractive power, and

wherein the lens assembly satisfies the following [Conditional Expression 1],

[Conditional Expression 1]

$$1.5 =< (T34+T45)/T23 =< 3$$

(where 'T23' is an air gap between the second lens and the third lens, measured on the optical axis, 'T34' is an air gap between the third lens and the fourth lens, measured on the optical axis, and 'T45' is an air gap between the fourth lens and the fifth lens, measured on the optical axis).

2. The image capturing device of claim 1, wherein at least one of the at least five lenses is a plastic lens.

3. The image capturing device of claim 1 or 2, wherein the lens assembly satisfies the following [Conditional Expression 2],

[Conditional Expression 2]

$$0.6 =< OAL/(ImgH*2) =< 0.69$$

(where 'OAL' is a distance from a subject-side surface (S1) of the first lens to the image sensor, measured on the optical axis, and 'ImgH' is a maximum image height of the image sensor).

4. The image capturing device of any one of claims 1 to 3, wherein the lens assembly satisfies the following [Conditional Expressions 3 and 4],

[Conditional Expression 3]

$$1.7 =< Fno =< 1.9$$

[Conditional expression 4]

$$35 \text{ degrees} =< HFOV =< 45 \text{ degrees}$$

(where 'Fno' is an F-number of the lens assembly, and 'HFOV' is a half field of view).

5. The image capturing device of any one of claims 1 to 4, wherein the lens assembly satisfies the following [Conditional Expression 5],

[Conditional Expression 5]

$$T4/TA =< 0.17$$

(where 'T4' is a thickness of the fourth lens measured on the optical axis, and 'TA' is a distance from the subject-side surface of the first lens to a sensor-side surface (S11) of the fifth lens, measured on the optical axis).

6. The image capturing device of any one of claims 1 to 5, wherein the lens assembly satisfies the following [Conditional Expression 6],

[Conditional Expression 6]

$$0 =< (R7-R8)/(R7+R8) =< 1$$

(where 'R7' is a radius of curvature of a point crossing the optical axis on a subject-side surface (S8) of the fourth lens, and 'R8' is a radius of curvature of a point crossing the optical axis on a sensor-side surface (S9) of the fourth lens).

7. The image capturing device of any one of claims 1 to 6, wherein the lens assembly satisfies the following [Conditional Expression 7],

[Conditional Expression 7]

$$0.3 =< Et4/T4 =< 0.5$$

(where 'Et4' is an edge thickness of the fourth lens measured parallel to the optical axis, and 'T4' is a thickness of the fourth lens measured on the optical axis).

8. The image capturing device of any one of claims 1 to 7, wherein the lens assembly further includes an aperture stop (stop) disposed between the first lens and the third lens, and

wherein the lens assembly satisfies the following [Conditional Expression 8],

[Conditional Expression 8]

$$0.1 =< ST/SL =< 0.5$$

(where 'ST' is a distance from the subject-side surface of the first lens to the aperture stop, measured on the optical axis, and 'SL' is a distance from the aperture stop to the sensor-side surface of the fifth lens, measured on the optical axis).

9. The image capturing device of any one of claims 1 to 8, wherein the second lens has a refractive index of 1.6 or more.

10. The image capturing device of any one of claims 1 to 9, wherein the first lens includes a convex subject-side surface (S1) and a sensor-side surface (S2) that is concave in a chief region of the first lens and convex in a marginal region of the first lens.

11. The image capturing device of any one of claims 1 to 10, wherein the third lens has a meniscus shape convex toward the image sensor and a refractive index of 1.6 or more.

12. The image capturing device of any one of claims 1 to 11, wherein the fifth lens has a convex shape inclined toward a subject side in a marginal region of the fifth lens around the chief region of the fifth lens such that the fifth lens includes at least one inflection point (IP).

13. The image capturing device of any one of claims 1 to 12, wherein the lens assembly further includes an infrared cut filter (F) disposed between the fifth lens and the image sensor.

14. An electronic device (101; 102; 104; 300) comprising:

the image capturing device (180; 280; 305; 312; 313; 400; 500; 600; 700; 800) of any one of claims 1 to 13;
a processor (120); and
memory (130) storing instructions that, when executed by the processor, cause the electronic device to receive light using the image sensor.

15. The electronic device of claim 14, wherein the memory further stores instructions that, when executed by the processor, cause the image capturing device or the electronic device to perform a focus adjustment operation or a focal length adjustment operation by linearly moving at least one of the at least five lenses along a direction of the optical axis.

FIG. 1

200

280

CAMERA MODULE

220
FLASH

210
LENS ASSEMBLY

230
IMAGE SENSOR

240
IMAGE STABILIZER

250
MEMORY

260
IMAGE SIGNAL PROCESSOR

FIG. 2

**FIG. 3**

FIG. 4

FIG. 5

LONGITUDINAL SPHERICAL ABER.

| | 656.3000 NM |
| | 587.6000 NM |
| | 546.1000 NM |
| | 486.1000 NM |
| | 435.8000 NM |

FOCUS (mm)

# FIG. 6

ASTIGMATIC FIELD CURVES

IMG HT

4.10 T S

3.07

2.05

1.02

-0.200 -0.100 0.0 0.100 0.200

FOCUS (mm)

DISTORTION

IMG HT

4.10

3.07

2.05

1.02

-5.0 -2.5 0.0 2.5 5.0

DISTORTION RATE (%)

FIG. 7

FIG. 8

FIG. 9

LONGITUDINAL SPHERICAL ABER.

FIG. 10

ASTIGMATIC FIELD CURVES

IMG HT

T S

4.10

3.07

2.05

1.02

-0.200 -0.100 0.0 0.100 0.200

FOCUS (mm)

DISTORTION

IMG HT

4.10

3.07

2.05

1.02

-5.0 -2.5 0.0 2.5 5.0

DISTORTION RATE (%)

FIG. 11

FIG. 12

FIG. 13

LONGITUDINAL SPHERICAL ABER.

| | |
|---|---|
| —— · —— | 656.3000 NM |
| —————— | 587.6000 NM |
| — — — — | 546.1000 NM |
| ·············· | 486.1000 NM |
| —————— | 435.8000 NM |

FOCUS (mm)

# FIG. 14

ASTIGMATIC FIELD CURVES

IMG HT

S
4.10 ⊢ ⟨ ⟩ T

3.07 ⊢

2.05 ⊢

1.02 ⊢

-0.200 -0.100  0.0  0.100  0.200

FOCUS (mm)

DISTORTION

IMG HT

4.10 ⊢

3.07 ⊢

2.05 ⊢

1.02 ⊢

-5.0  -2.5  0.0  2.5  5.0

DISTORTION RATE (%)

# FIG. 15

# FIG. 16

FIG. 17

LONGITUDINAL SPHERICAL ABER.

| | |
|---|---|
| —·—·— | 656.3000 NM |
| —— | 587.6000 NM |
| – – – – | 546.1000 NM |
| ·············· | 486.1000 NM |
| —— | 435.8000 NM |

FOCUS (mm)

FIG. 18

ASTIGMATIC FIELD CURVES

IMG HT

4.10

3.07

2.05

1.02

-0.200 -0.100 0.0 0.100 0.200

FOCUS (mm)

FIG. 19

DISTORTION

IMG HT

4.10

3.07

2.05

1.02

-5.0 -2.5 0.0 2.5 5.0

DISTORTION RATE (%)

FIG. 20

FIG. 21

LONGITUDINAL SPHERICAL ABER.

| | 656.3000 NM |
|---|---|
| | 587.6000 NM |
| | 546.1000 NM |
| | 486.1000 NM |
| | 435.8000 NM |

FOCUS (mm)

# FIG. 22

ASTIGMATIC FIELD CURVES

IMG HT

T 4.10 S

3.07

2.05

1.02

-0.200  -0.100   0.0   0.100   0.200

FOCUS (mm)

DISTORTION

IMG HT

4.10

3.07

2.05

1.02

-5.0   -2.5   0.0   2.5   5.0

DISTORTION RATE (%)

# FIG. 23

# FIG. 24

## INTERNATIONAL SEARCH REPORT

| International application No. |
| --- |
| **PCT/KR2024/014154** |

### A. CLASSIFICATION OF SUBJECT MATTER

**H04N 23/55**(2023.01)i; **H04N 23/54**(2023.01)i; **G03B 17/12**(2006.01)i; **G02B 13/00**(2006.01)i; **G02B 15/14**(2006.01)i; **G03B 9/02**(2006.01)i

According to International Patent Classification (IPC) or to both national classification and IPC

### B. FIELDS SEARCHED

Minimum documentation searched (classification system followed by classification symbols)

H04N 23/55(2023.01); G02B 13/00(2006.01); G02B 13/18(2006.01); G02B 3/00(2006.01); G02B 5/20(2006.01); G02B 9/60(2006.01); G02B 9/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촬상 장치(image sensor), 렌즈 조립체(lens assembly), 굴절력(refractive power), 메니스커스(meniscus), 공기 간격(air gap)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2023-0056320 A (SAMSUNG ELECTRONICS CO., LTD.) 27 April 2023 (2023-04-27)<br>See paragraphs [0023] and [0075]; claims 1, 5, 7 and 14-15; and figures 1-2 and 5-6. | 1-15 |
| Y | KR 10-2016-0016931 A (COREPHOTONICS LTD.) 15 February 2016 (2016-02-15)<br>See claims 1-2, 7 and 29. | 1-15 |
| Y | KR 10-2023-0021283 A (SAMSUNG ELECTRONICS CO., LTD.) 14 February 2023 (2023-02-14)<br>See paragraphs [0085]-[0087]. | 3 |
| Y | JP 2016-090777 A (HOYA CORP.) 23 May 2016 (2016-05-23)<br>See paragraph [0024]. | 4 |
| Y | KR 10-2022-0081800 A (LG INNOTEK CO., LTD.) 16 June 2022 (2022-06-16)<br>See paragraphs [0040], [0055] and [0068]; claim 9; and figure 1. | 6,9-10,12 |

✓ Further documents are listed in the continuation of Box C.    ✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **23 December 2024** | **23 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/014154** |

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-1771968 B1 (DIOSTECH) 29 August 2017 (2017-08-29)<br>See paragraphs [0037]-[0039]. | 7 |

Form PCT/ISA/210 (second sheet) (July 2022)

## INTERNATIONAL SEARCH REPORT
### Information on patent family members

| International application No. |
| --- |
| **PCT/KR2024/014154** |

| Patent document cited in search report | | | Publication date (day/month/year) | Patent family member(s) | | | Publication date (day/month/year) |
| --- | --- | --- | --- | --- | --- | --- | --- |
| KR | 10-2023-0056320 | A | 27 April 2023 | WO | 2023-068475 | A1 | 27 April 2023 |
| KR | 10-2016-0016931 | A | 15 February 2016 | CN | 105408806 | B | 15 February 2019 |
| | | | | CN | 109884772 | A | 14 June 2019 |
| | | | | EP | 3017326 | A1 | 11 May 2016 |
| | | | | EP | 3017326 | B1 | 06 January 2021 |
| | | | | EP | 4379443 | A3 | 04 September 2024 |
| | | | | IL | 243070 | A | 31 October 2018 |
| | | | | JP | 2016-523389 | A | 08 August 2016 |
| | | | | KR | 10-1700555 | B1 | 26 January 2017 |
| | | | | KR | 10-2016-0014057 | A | 05 February 2016 |
| | | | | US | 2015-0029601 | A1 | 29 January 2015 |
| | | | | US | 2015-0244942 | A1 | 27 August 2015 |
| | | | | US | 2024-0077703 | A1 | 07 March 2024 |
| | | | | US | 2024-0219691 | A1 | 04 July 2024 |
| | | | | US | 9402032 | B2 | 26 July 2016 |
| | | | | US | 9413972 | B2 | 09 August 2016 |
| KR | 10-2023-0021283 | A | 14 February 2023 | US | 2023-0051248 | A1 | 16 February 2023 |
| | | | | WO | 2023-013846 | A1 | 09 February 2023 |
| JP | 2016-090777 | A | 23 May 2016 | US | 2016-0124192 | A1 | 05 May 2016 |
| | | | | US | 9664881 | B2 | 30 May 2017 |
| KR | 10-2022-0081800 | A | 16 June 2022 | CN | 116685886 | A | 01 September 2023 |
| | | | | EP | 4261583 | A1 | 18 October 2023 |
| | | | | JP | 2023-553143 | A | 20 December 2023 |
| | | | | TW | 202238206 | A | 01 October 2022 |
| | | | | US | 2024-0019663 | A1 | 18 January 2024 |
| | | | | WO | 2022-124835 | A1 | 16 June 2022 |
| KR | 10-1771968 | B1 | 29 August 2017 | | None | | |

Form PCT/ISA/210 (patent family annex) (July 2022)